# EUROPÄISCHE PATENTSCHRIFT

(11) **EP 1 908 160 B1**
(45) Veröffentlichungstag und Bekanntmachung des Hinweises auf die Patenterteilung: **05.12.2018**
(21) Anmeldenummer: 06775747.6
(22) Anmeldetag: 24.07.2006
(51) Int. Cl.: H02J 7/00

(54) **ENERGIESPEICHER**
ENERGY STORE
ACCUMULATEUR D'ENERGIE

(30) Priorität: 25.07.2005 DE 102005034588
(43) Veröffentlichungstag der Anmeldung: 09.04.2008
(73) Patentinhaber: TEMIC Automotive Electric Motors GmbH, 10553 Berlin (DE)
(72) Erfinder: RUDORFF, Axel, 10317 Berlin (DE); MALIK, Manfred, 82377 Penzberg (DE)
(86) Internationale Anmeldenummer: PCT/DE2006/001292
(87) Internationale Veröffentlichungsnummer: WO 2007/012315

(56) Entgegenhaltungen:
- EP-A- 1 083 646
- EP-A- 1 247 979
- EP-A- 1 283 580
- EP-A2- 1 538 724
- DE-A1- 19 709 234
- JP-A- 2000 197 279
- US-A- 5 617 004
- US-A1- 2006 012 378
- KUTKUT N H ET AL: "Dynamic equalization techniques for series battery stacks" 6. Oktober 1996 (1996-10-06), TELECOMMUNICATIONS ENERGY CONFERENCE, 1996. INTELEC '96., 18TH INTERNATIONAL BOSTON, MA, USA 6-10 OCT. 1996, NEW YORK, NY, USA,IEEE, US, PAGE(S) 514-521 , XP010204362 ISBN: 0-7803-3507-4 Zusammenfassung Seite 515; Abbildung 4

## Beschreibung

### GEBIET DER ERFINDUNG

Die Erfindung bezieht sich allgemein auf die Speicherung elektrischer Energie, und beispielsweise auf einen Energiespeicher mit mehreren, in Reihe geschalteten Speicherelementen und einer Ladungsumverteilungsschaltung. Der Energiespeicher ist so eingerichtet ist, daß die Speicherelement-Spannung gemessen und mit einem Spannungs-Schwellenwert verglichen wird, wobei die Ladungsumverteilungsschaltung bei Überschreiten des Spannungs-Schwellenwerts durch ein Speicherelement aus diesem Speicherelement Ladung abführt und hierdurch dessen Spannung verringert.

### HINTERGRUND DER ERFINDUNG

Speicher für elektrische Energie sind üblicherweise aus einzelnen Speicherelementen aufgebaut. Die nominelle Betriebsspannung dieser Speicherelemente liegt meist bei relativ niedrigen Spannungswerten, z.B. im Bereich von 2 bis 2,5 V bei Doppelschicht-Kondensatoren. Für die meisten Anwendungen ist jedoch eine weit höhere Betriebsspannung des Energiespeichers erforderlich. So werden beispielsweise die elektrischen Antriebe von Hybridfahrzeugen, je nach Typ, mit 48 V bis zu 300 V betrieben, so daß ein zur Speisung eines solchen Antriebs eingesetzter Energiespeicher eine entsprechend hohe Betriebsspannung aufweisen soll. Um diese hohe Spannung zu erreichen, sind bei Energiespeichern typischerweise eine entsprechende Anzahl von Speicherelementen in Reihe geschaltet. Beispielsweise kann ein 48 V-Energiespeicher durch eine Serienschaltung von 20 Doppelschicht-Kondensatoren mit einer Betriebsspannung von ca. 2,4 V gebildet werden.

Es ist inzwischen bekannt, daß die Lebensdauer derartiger Energiespeicher durch Inhomogenitäten im Ladungszustand der einzelnen Speicherelemente wesentlich verkürzt wird (so z.B. aus H. Schmidt et al., "The charge equalizer - a new system to extend battery lifetime in photovoltaic systems, U.P.S. and electric vehicles", International Telecommunications Energy Conference, Intelec, Paris, 27. bis 30. September 1993, IEEE, Bd. 2, Konf. 15, S. 146-151). Zuvor hatte man unterstellt, daß bei einer Serienschaltung einzelner Speicherelemente alle diese Elemente identische Eigenschaften haben und sich immer im gleichen Ladungszustand befinden. Tatsächlich weichen die - nominell gleichen - Speicherelemente hinsichtlich ihrer

Bei einer einfachen Serienschaltung können solche Unterschiede einerseits - bei Entladevorgängen - zu Tiefenentladungen oder sogar inversen Ladungen von Speicherelementen geringerer Kapazität, und andererseits - bei Aufladevorgängen - zu Überladungen von vorzeitig voll aufgeladenen Speicherelementen führen. Dieses Verhalten ist i.a. divergent; das heißt, selbst kleine Unterschiede zwischen den individuellen Speicherelementen führen im Lauf der Zeit zu den genannten Erscheinungen, wenn nur eine ausreichend große Zahl von Lade-/Entladezyklen durchlaufen wird. Die genannten Erscheinungen führen zunächst zur Beschädigung oder zum Ausfall des betreffenden Speicherelements, und können schließlich - nach Art einer Kettenreaktion - den vorzeitigen Ausfall des ganzen Energiespeichers bewirken.

Um derartige Auswirkungen der (in der Praxis unvermeidlichen) Unterschiede zwischen einzelnen Speicherelementen zu vermeiden, haben bereits mehrere Autoren verschiedene Verfahren vorgeschlagen, mit denen eine Symmetrierung des Ladezustands der einzelnen Speicherelemente herbeigeführt wird, so Schmidt et al. in dem bereits oben genannten Konferenzbeitrag und in EP 0 432 639 A2, N. Kutkut et al. in "Dynamic equalization techniques for series battery stacks", Telecommunications Energy Conference 1996 (Intelec), Boston, 6. bis 10. Oktober 1996, IEEE 0-7803-3507-4/96, S. 514-521, sowie Ridder in EP 1 283 580 A2. Gemeinsam liegt diesen Vorschlägen der Gedanke zugrunde, die Spannung der Speicherelemente zu überwachen, und höher aufgeladenen Speicherelementen Ladung zu entnehmen (wobei bei manchen der Vorschläge allen Speicherelementen Ladung entnommen wird, jedoch den höher aufgeladenen mehr entnommen wird als den niedrig aufgeladenen). Während bei frühen Vorschlägen (von denen beispielsweise Schmidt in dem genannten Konferenzpaper berichtet) die den höher aufgeladenen Speicherelementen entnommene Energie in Heizwiderständen dissipiert wurde, wird gemäß jüngeren Vorschlägen die entnommene Energie wieder dem Energiespeicher (d.h., im Ergebnis den anderen Speicherelementen) zugeführt. Eine solche Umspeicherung ist wirkungsgradmäßig günstiger, da bei ihr nicht die gesamte umgespeicherte Energie verlorengeht, sondern nur die mit dem Umspeichervorgang einhergehenden Verluste. Mit diesen jüngeren Vorschlägen läßt sich - bei relativ gutem Wirkungsgrad - die Lebensdauer von Energiespeichern der genannten Art beträchtlich verlängern.

Die von Ridder in der EP 1 283 580 A2 beschriebene Symmetrierschaltung ist aus Ladungsabführungsschaltungen aufgebaut, die den einzelnen Speicherelementen zugeordnet sind und weitgehend autonom arbeiten. Eine übergeordnete Steuereinheit gibt den Ladungsabführungsschaltungen Spannungsschwellen vor (EP 1 283 580 A2, Absatz [0027]). In der JP 2000 197279 A wird bei Überschreiten einer temperaturabhängigen Schwellenspannung eine von mehreren Zellen einer Zellenreihenschaltung entladen, um hohe Zellenspannungen zu vermeiden. Bei hohen Temperaturen ist die Schwellenspannung niedriger als bei geringen Temperaturen. In der EP 1 247 979 A2 wird erwähnt, zur Lebensdauererhöhung die Betriebsspannung von Kondensatoren mit abnehmender Temperatur zu erhöhen. Die EP 1 538 724 A2 erwähnt, dass die Spannung eines Konstantspannung-Ladeprozesses mit der Anzahl der Ladezyklen verringert werden kann.

### KURZFASSUNG DER ERFINDUNG

Die Erfindung betrifft gemäß einem ersten Aspekt einen Energiespeicher mit mehreren, in Reihe geschalteten Speicherelementen und einer Ladungsumverteilungsschaltung. Der Energiespeicher ist so eingerichtet, daß die Speicherelement-Spannung gemessen und mit einem Spannungs-Schwellenwert verglichen wird. Bei Überschreiten des Spannungs-Schwellenwerts durch ein Speicherelement führt die Ladungsumverteilungsschaltung aus diesem Speicherelement Ladung ab und verringert hierdurch dessen Spannung. Außerdem wird eine speicherbezogene Temperaturermittlung durchgeführt, und der Spannungs-Schwellenwert wird variabel in Abhängigkeit von der ermittelten Temperatur gesetzt, derart, daß mit zunehmender Temperatur der Spannungs-Schwellenwert verringert wird.

Ein weiterer Aspekt betrifft einen Energiespeicher für ein mit Elektroantrieb oder Elektrohybridantrieb ausgerüstetes Fahrzeug, mit mehreren, in Reihe geschalteten Speicherelementen und einer Ladungsumverteilungsschaltung. Der Energiespeicher ist so eingerichtet, daß die Speicherelement-Spannung gemessen und mit einem Spannungs-Schwellenwert verglichen wird. Bei Überschreiten des Spannungs-Schwellenwerts durch ein Speicherelement führt die Ladungsumverteilungsschaltung aus diesem Speicherelement Ladung ab und verringert hierdurch dessen Spannung. Der Spannungs-Schwellenwert wird variabel in Abhängigkeit vom momentanen Betriebszustand des Fahrzeugs gesetzt, derart, daß der Schwellenwert für relativ kurz dauernde Zeiträume mit relativ hohem Einspeicherungs- oder Entnahmebedarf höher gesetzt wird.

Ein Beispiel, welches nicht zu der Erfindung gehört, betrifft einen Energiespeicher mit mehreren, in Reihe geschalteten Speicherelementen und einer Ladungsumverteilungsschaltung. Die Speicherelemente können hinsichtlich ihrer Alterung unterschiedlich weit fortgeschrittenen sein. Der Energiespeicher ist so eingerichtet, daß die Speicherelement-Spannung gemessen und mit einem Spannungs-Schwellenwert verglichen wird. Bei Überschreiten des Spannungs-Schwellenwerts durch ein Speicherelement führt die Ladungsumverteilungsschaltung aus diesem Speicherelement Ladung ab und verringert hierdurch dessen Spannung. Der Spannungs-Schwellenwert wird für Speicherelemente mit relativ weit fortgeschrittener Alterung niedriger gesetzt als für Speicherelemente mit weniger weit fortgeschrittener Alterung.

Weitere Merkmale sind in den offenbarten Vorrichtungen enthalten oder gehen für den fachmännischen Leser aus der folgenden detaillierten Beschreibung von Ausführungsformen und den angefügten Zeichnungen hervor.

### KURZE BESCHREIBUNG DER ZEICHNUNG

Ausführungsformen der Erfindung werden nun beispielhaft und unter Bezugnahme auf die angefügte Zeichnung beschrieben, in der:
Fig. 1 ein Lebensdauer-Spannungs-Diagramm eines beispielhaften Speicherelements (z.B. eines Doppelschicht-Kondensators) ist;
Fig. 2 einen Schaltplan einer Ausführungsform eines Energiespeichers mit mehreren, in Reihe geschalteten Speicherelementen und mit Ladungsumverteilungsschaltung und einer übergeordneten Steuereinheit zeigt;
Fig. 3 Schaltpläne einer anderen Ausführungsform eines Energiespeichers, bei der jeweils Paare von Speicherelementen zu einer Speicherelement-Gruppe zusammengefaßt sind, zeigt;
Fig. 4 eine räumliche Darstellung einer beispielhaften Zwillingsanordnung der beiden Speicherelemente eines Speicherelement-Paars von Fig. 3 ist;
Fig. 5 Diagramme zur Veranschaulichung der Ladungsumverteilungsfunktion zeigt;
Fig. 6 anhand eines Diagramms schematisch zeigt, wie bei manchen Ausführungsformen der Spannungs-Schwellenwert in Abhängigkeit von der Temperatur variiert wird;
Fig. 7 schematisch eine bei manchen Ausführungsformen gegebene Abhängigkeit des Spannungs-Schwellenwerts vom Fahrzeug-Betriebszustand zeigt;
Fig. 8 eine bei manchen Ausführungsformen vorgenommene asymmetrische Schwellensetzung zur Erzielung einer langsameren Alterung bereits überdurchschnittlich gealterter Speicherelemente veranschaulicht;
Fig. 9 die Abhängigkeit von Schwellenwerten von der Temperatur ähnlich Fig. 6 zeigt, jedoch zusätzlich in Abhängigkeit vom Fahrzeug-Betriebszustand gemäß Fig. 7 und dem Alterungszustand der Speicherelemente gemäß Fig. 8;
Fig. 10 eine schematisch vereinfachte Darstellung eines Kraftfahrzeug-Antriebssystems mit einer Ausführungsform des beschriebenen Energiespeichers ist.

In den Figuren sind funktionsgleiche Teile mit gleichen oder ähnlichen Bezugszeichen gekennzeichnet.

### BESCHREIBUNG DER BEVORZUGTEN AUSFÜHRUNGSFORMEN

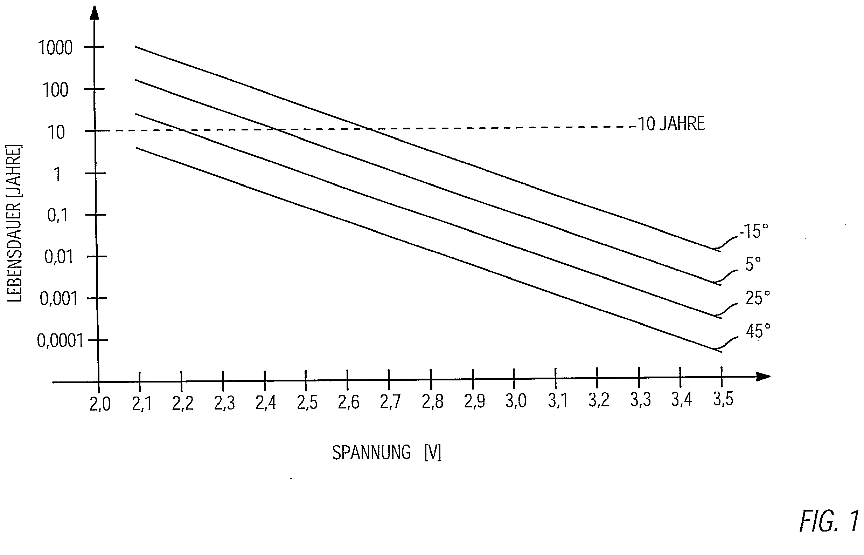

Bevor das Lebensdauer-Spannungs-Diagramm eines beispielhaften Doppelschicht-Kondensators anhand von Fig. 1 näher erläutert wird, folgen zunächst einige Anmerkungen zu den bevorzugten Ausführungsformen.

Diese betreffen einen Energiespeicher mit mehreren in Reihe geschalteten Speicherelementen, bei denen es sich um galvanische Zellen, Kondensatoren, Doppelschicht-Kondensatoren, etc., handelt. Der Grund für die Reihenschaltung der Speicherelemente liegt, wie eingangs erläutert wurde, darin, daß der Energiespeicher - als Ganzes betrachtet - eine weitaus höhere Betriebsspannung liefern soll als die nominelle Betriebsspannung eines einzelnen Speicherelements. Beispielsweise liefert ein Energiespeicher mit 20 in Reihe geschalteten 2,4V-Speicherelementen eine Spannung von ca. 48V. Bei bestimmten Ausführungsformen kann ein einzelnes Speicherelement durch eine Parallelschaltung mehrerer Unterelemente gebildet sein; derartiges wird ungeachtet seiner inneren Struktur hier als "Speicherelement" bezeichnet.

Wie eingangs erläutert wurde, können bei einer reinen Reihenschaltung (ohne Ladungsausgleich zwischen den einzelnen Speicherelementen) die unvermeidlich vorhandenen Unterschiede zwischen den einzelnen Speicherelementen zu ungleichen Ladungszuständen führen. Bei den Ausführungsformen ist daher eine Ladungsumverteilungsschaltung vorgesehen, welche dazu geeignet ist, einzelnen der in Reihe geschalteten Speicherelementen Ladung zu entnehmen. Die Entnahme von Ladung aus einem Speicherelement erfolgt dann, wenn die Spannung des Speicherelements einen Spannungs-Schwellenwert überschreitet. Hierzu mißt die Ladungsumverteilungsschaltung laufend die Speicherelementspannung, vergleicht diese mit dem Spannungs-Schwellenwert, und veranlaßt die Ladungsabführung dann, wenn die gemessene Speicherelementspannung den Spannungs-Schwellenwert überschreitet.

Wie unten noch näher ausgeführt wird, handelt es sich bei manchen der Ausführungsformen hierbei um einen einheitlichen Spannungs-Schwellenwert für alle Speicherelemente des Energiespeichers, während bei anderen Ausführungsformen jedem Speicherelement ein individueller Spannungs-Schwellenwert zugeordnet wird, der sich von den Spannungs-Schwellenwerten der anderen Speicherelemente unterscheiden kann (aber im Einzelfall natürlich nicht unterscheiden muß). Bei noch weiteren Ausführungsformen ist ein Mittelweg zwischen diesen beiden Extremen realisiert, indem jeweils Gruppen von Speicherelementen (z.B. Speicherelement-Paaren) ein eigener Spannungs-Schwellenwert zugeordnet wird.

Gemeinsam ist den verschiedenen Ausführungsformen, daß der einheitliche Schwellenwert bzw. die individuellen Schwellenwerte nicht unveränderlich festgelegt sind, sondern variabel in Abhängigkeit von einem oder mehreren Parametern gesetzt werden. Die Abhängigkeitsparameter sind beispielsweise: (i) Speicherelement-Temperatur; (ii) Fahrzeug-Betriebszustand; und (iii) Speicherelement-Alterungszustand. Bei manchen der Ausführungsformen ist nur eine dieser Abhängigkeiten (also z.B. (i), (ii) oder (iii)) realisiert, bei anderen Ausführungsformen sind zwei dieser Abhängigkeiten kombiniert (also z.B. (i) und (ii), (i) und (iii), oder (ii) und (iii)); bei einer weiteren Ausführungsform sind schließlich sämtliche drei Abhängigkeiten zusammen realisiert (d.h. (i) und (ii) und (iii)).

Gemeinsam liegt diesen verschiedenen Maßnahmen zur variablen Schwellenwerteinstellung die Erkenntnis zugrunde, daß bei verschiedenen Speicherelementtypen die Lebensdauer des Speicherelements stark von der Spannung abhängt, mit der das Speicherelement betrieben wird. Je höher die Betriebsspannung liegt, desto schneller altert das Speicherelement. Beispielsweise bei einem Doppelschicht-Kondensator zersetzt sich der Elektrolyt um so schneller, je höher die Betriebsspannung des Doppelschicht-Kondensators liegt. Zur Erhöhung der Lebensdauer wäre es natürlich möglich, den Spannungs-Schwellenwert auf einen relativ niedrigen Wert unveränderlich festzulegen. Der Preis hierfür wäre allerdings eine insgesamt verringerte Speicherkapazität des Energiespeichers. Durch die hier getroffene Maßnahme variabel gesetzter Spannungs-Schwellenwerte erzielt man hingegen einerseits eine relativ lange Lebensdauer des Energiespeichers ohne generelle (d.h. in allen Betriebszuständen oder für alle Speicherelemente gleiche) Herabsetzung der Speicherkapazität.

Generell wird der Energiespeicher bei einer Erhöhung der Spannungsschwelle(n) aufnahmefähiger. Eine Erniedrigung der Spannungsschwellen bei aufgeladenem Speicher führt entweder nur zur Umspeicherung von Energie von spannungsmäßig besonders hoch liegenden Speicherelementen (solange die anderen Speicherelemente noch aufnahmefähig sind) oder zur Herausnahme von gespeicherter Energie aus dem gesamten Energiespeicher, beispielsweise in Form von Verlustwärme der Ladungsumverteilungsschaltung (wenn die anderen Speicherelemente nicht mehr aufnahmefähig sind).

### Maßnahme (i): Variation des Schwellenwerts an Abhängigkeit von der Temperatur

Bei einer ersten Gruppe von Ausführungsformen wird der Spannungs-Schwellenwert in Abhängigkeit von der Speicherelement-Temperatur gesetzt. Dem liegt die Erkenntnis zugrunde, daß die Speicherelement-Lebensdauer - außer von der Spannung - in hohem Maße auch von der Speicherelement-Temperatur abhängt. Denn bei einem kondensatorartigen Speicherelement führt nicht hohe Spannung allein, sondern hohe Spannung bei hoher Temperatur zu einer schnellen Zersetzung des Elektrolyts. Spannung und Temperatur sind komplementäre Einflußgrößen bezüglich der Lebensdauer. Bei niedriger Speicherelement-Temperatur kann daher ein solches Speicherelement mit relativ hoher Spannung betrieben werden, und umgekehrt. Bei den Ausführungsformen dieser Gruppe wird daher zur Ausnutzung dieser Komplementarität eine speicherbezogene Temperaturermittlung durchgeführt, und der Spannungs-Schwellenwert wird variabel in Abhängigkeit von der ermittelten Temperatur gesetzt, derart, daß mit zunehmender Temperatur der Spannungs-Schwellenwert verringert wird.

Die Temperatur der Speicherelemente wird durch externe und interne Wärmequellen und -senken bestimmt. Eine externe Wärmequelle oder -senke ist die Umgebung (je nachdem, ob die Umgebungstemperatur unter oder über der Speicherelementtemperatur liegt, wobei die Umgebungstemperatur z.B. jahreszeitlich schwanken kann). Meist ist die Umgebung eine Wärmesenke, z.B. indem der Energiespeicher durch die Umgebungsluft gekühlt werden (bei manchen Ausführungsformen ist zur Kühlung des Energiespeichers mit Umgebungsluft ein Kühlgebläse vorgesehen). Daneben können ggf. weitere externe Wärmequellen in der Nähe des Energiespeichers angeordnet sein. Ist der Energiespeicher beispielsweise im Motorraum eines Hybridfahrzeugs eingebaut, so kann er beispielsweise Abwärme vom Verbrennungsmotor (z.B. durch Wärmeleitung, Konvektion, Strahlung) erhalten und sich dadurch in Abhängigkeit von der Verbrennungsmotortemperatur erwärmen. Die hauptsächliche interne Wärmequelle bildet die bei Stromfluß in den Speicherelementen aufgrund deren Innenwiderstands anfallende Verlustwärme. Insgesamt kann die Temperatur des Energiespeichers je nach Umgebungstemperatur, Betriebszustand des Fahrzeugs und Verlustleistung (abhängig von der Größe der entnommenen oder eingespeicherten Leistung) in einem relativ großen Temperaturbereich (bis zu 100° C) schwanken.

Bei einigen der Ausführungsformen wird die speicherbezogene Temperatur durch Temperaturmessung ermittelt. Hierzu sind beispielsweise Temperaturfühler vorgesehen, die die momentane Betriebstemperatur jedes einzelnen Speicherelements messen. Bei anderen Ausführungsformen sind Gruppen von Speicherelementen, z.B. Speicherelement-Paare, jeweils gemeinsam mit einem Temperaturfühler ausgerüstet, der ungefähr die mittlere Temperatur der Speicherelemente seiner Gruppe mißt. Bei einer noch weiteren Ausführungsform ist ein Temperaturfühler so am Energiespeicher angeordnet, daß er ungefähr die mittlere Temperatur sämtlicher Speicherelemente mißt.

Bei anderen Ausführungsformen erfolgt die Temperaturermittlung hingegen nicht durch Temperaturmessung, sondern es wird aus anderen (gemessenen oder anderweitig bestimmten) Größen auf die Temperatur geschlossen. Beispielsweise wird aus der (gemessenen) Umgebungstemperatur, der (gemessenen) Kühlwassertemperatur des Verbrennungsmotor sowie dem (z.B. ebenfalls durch Messung bekannten) Stromfluß durch den Energiespeicher auf die momentane Energiespeichertemperatur geschlossen.

Bei einigen Ausführungsformen wird - wie oben bereits erwähnt wurde - ein einheitlicher Spannungs-Schwellenwert für die Speicherelemente des Energiespeichers verwendet. Dieser einheitliche Spannungs-Schwellenwert wird variabel in Abhängigkeit von der ermittelten Temperatur gesetzt, wobei diese ungefähr die mittlere Temperatur der verschiedenen Speicherelemente repräsentiert. Bei einigen Ausführungsformen werden die Temperaturen der einzelnen Speicherelemente gemessen, und die mittlere Temperatur wird durch Mittelung dieser Temperaturmeßwerte berechnet. Bei anderen Ausführungsformen wird hingegen direkt eine mittlere Temperatur gemessen, z.B. durch Temperaturmessung an einem Gehäuse des Energiespeichers, das mit den Speicherelementen in Wärmeleitungskontakt steht und dessen Temperatur ungefähr der mittleren Speicherelementtemperatur entspricht.

Bei anderen Ausführungsformen werden - wie oben ebenfalls bereits erwähnt wurde - einzelnen Speicherelementen - oder Gruppen von Speicherelementen - individuelle Spannungs-Schwellenwerte zugeordnet. Diese individuellen Spannungs-Schwellenwerte werden für die einzelnen Speicherelemente bzw. Speicherelement-Gruppen variabel in Abhängigkeit von den individuell für diese Speicherelemente bzw. Speicherelement-Gruppen ermittelten Temperaturen gesetzt. Hierdurch wird eine Spannungsherabsetzung gezielt bei denjenigen Speicherelementen herbeigeführt, die aufgrund besonderer äußerer Wärmezuführung (z.B. wegen besonderer Nähe zum Verbrennungsmotor) und/oder besonderer innerer Wärmeerzeugung (z.B. wegen eines über dem Durchschnitt liegenden Innenwiderstands) eine höhere Temperatur als die anderen Speicherelemente haben. Eine derartige speicherelement-individuelle Spannungsschwelleneinstellung in Abhängigkeit von der individuellen Speicherelementtemperatur wirkt sich vergleichmäßigend auf die Alterung der einzelnen Speicherelemente - und damit besonders günstig für die Lebensdauer des Gesamt-Energiespeichers - aus.

### Maßnahme (ii): Variation des Schwellenwerts an Abhängigkeit vom von Fahrzeug-Betriebszustand

Eine zweite Gruppe von Ausführungsformen betrifft denjenigen Fall, bei dem ein mit Elektroantrieb oder Verbrennungsmotor-Elektrohybridantrieb ausgerüstetes Fahrzeug mit dem Energiespeicher ausgerüstet ist. Bei dieser zweiten Gruppe wird der Spannungs-Schwellenwert in Abhängigkeit vom Betriebszustand des Fahrzeugs gesetzt, und zwar derart, daß der Schwellenwert für relativ kurz dauernde Zeiträume mit relativ hohem Energieeinspeicherungs- oder - entnahmebedarf höher gesetzt wird als für andere Zeiten. Dieser Maßnahme liegt die Überlegung zugrunde, daß für relativ kurze Zeiträume eine schnellere Alterung akzeptabel sein kann, da derartige kurze Zeiträume wegen ihres kleinen Anteils an der Gesamtlebensdauer nur relativ wenig lebensdauerverkürzend ins Gewicht fallen. Andererseits erhöht sich durch eine solche Maßnahme das effektive Speichervermögen des Energiespeichers deutlich.

Bei den Ausführungsformen der zweiten Gruppe handelt es sich bei den Betriebszuständen, in deren Abhängigkeit die Schwellenwertsetzung erfolgt, zum Beispiel um einen oder mehrere der folgenden Zustände:
- Fahrbetrieb/Betriebsruhe: Bei manchen Ausführungsformen bleibt der Energiespeicher auch dann in geladenem Zustand, wenn sich das Fahrzeug in Betriebsruhe befindet. Der Spannungs-Schwellenwert wird während der Betriebsruhe des Fahrzeugs auf einen niedrigeren Wert gesetzt als bei Fahrbetrieb. Angesichts der Tatsache, daß beispielsweise ein übliches, privat genutztes Personenfahrzeug typischerweise 20 mal so lange in Betriebsruhe wie im Fahrbetrieb steht, wirkt sich die Spannungsabsenkung bei Betriebsruhe stark lebensverlängernd aus.
- dynamischer Betrieb/undynamischer Betrieb: Bei "dynamischem" Betrieb, d.h. bei einem Betrieb mit stärker wechselndem Fahrzustand, wie häufigem Beschleunigen und anschließendem Abbremsen, besteht bei einem Elektrofahrzeug oder Elektrohybridfahrzeug mit elektrischer Bremsung und Bremsenergierückgewinnung relativ häufig Bedarf nach Einspeisung der beim elektrischen Bremsen gewonnenen Energie in den Energiespeicher. Die jeweils eingespeicherte Energie verbleibt dann meist nur relativ kurz im Energiespeicher, da sie in einem oft sich bald anschließenden Beschleunigungsvorgang sogleich wieder für eine elektromotorische Beschleunigung oder Beschleunigungsunterstützung aus dem Speicher entnommen wird. Entsprechend wird bei manchen Ausführungsformen bei dynamischem Betrieb, also Betrieb mit stärker wechselndem Fahrzeugzustand (z.B. im Stadtverkehr) der Spannungs-Schwellenwert höher gesetzt als bei undynamischem Betrieb, also Betrieb mit gleichmäßigerem Fahrzustand (z.B. bei Fahren auf der Autobahn).
- Nutzbremsung/keine Nutzbremsung: Unabhängig davon, ob der momentane Betriebszustand ein dynamischer (Stadtverkehr) oder ein undynamischer (Autobahnverkehr) ist, besteht im Prinzip bei jeder größeren elektrischen Nutzbremsung Bedarf nach Einspeicherung einer relativ großen Energiemenge. Bei manchen Ausführungsformen wird daher bei einer elektrischen Nutzbremsung der Spannungs-Schwellenwert hochgesetzt. diese Hochsetzung bleibt über einen gewissen Zeitraum nach der Nutzbremsung erhalten; erst dann wird der Schwellenwert wieder herabgesetzt. Häufig wird in diesem Zeitraum die eingespeicherte Bremsenergie gleich wieder für Nutzzwecke, z.B. eine Fahrzeugbeschleunigung, aus dem Speicher entnommen. Somit kann durch diese kurzfristige Schwellenanhebung eine größere Menge an Bremsenergie rekuperiert werden.

Insgesamt erlaubt die Maßnahme (ii) somit eine effizientere Ausnutzung des Energiespeichers bei Verwendung als Bremsenergie- und Antriebsenergiespeicher in einem Elektrofahrzeug oder Elektrohybridfahrzeug, ohne daß damit eine beträchtliche Lebensdauerverkürzung des Energiespeichers einherginge.

### Maßnahme (iii): Variation des Schwellenwerts in Abhängigkeit vom Speicherelement-Alterungszustand

Während es bei Ausführungsformen gemäß Maßnahmen (i) und (ii) möglich (wenn auch nicht zwingend) ist, die Speicherelemente gleich zu behandeln und einen einheitlichen Spannungs-Schwellenwert in variabler Weise für alle Speicherelemente gemeinsam zu setzen, bezieht sich die Maßnahme (iii) auf Ungleichbehandlung der Speicherelemente zwecks Vergleichmäßigung von unterschiedlichen Speicherelement-Alterungszuständen. Die Lebensdauer eines Energiespeichers, der aus vielen in Serie geschalteten Speicherelementen aufgebaut ist, entspricht im wesentlichen der Lebensdauer des am kürzesten lebenden Speicherelements. Eine Verlangsamung der Alterung eines bereits überdurchschnittlich gealterten Speicherelements auf Kosten der noch länger lebenden Speicherelemente verlängert somit die Gesamtlebensdauer des Energiespeichers. Eine selektive Alterungssverlangsamung für einzelne Speicherelemente wirdbei diesem Beispiel dadurch herbeigeführt, daß für die betreffenden Speicherelemente der Spannungs-Schwellenwert niedriger gesetzt wird als für die anderen Speicherelemente.

Es gibt verschiedene Indikatoren für den Alterungszustand eines Speicherelements. Einer dieser Indikatoren ist beispielsweise die Speicherelement-Kapazität, da diese mit zunehmender Alterung abnimmt. Die Kapazität ist bekanntlich definiert als die pro Spannungseinheit im Speicherelement gespeicherter Ladung. Bei manchen Beispielen wird daher zur Messung des Alterungszustands eines Speicherelements der durch den Energiespeicher fließende Strom gemessen (oder, alternativ, ein Strom bekannter Größe aufgeprägt). Aus dem Strom wird durch Integration die Änderung der gespeicherten Ladung ermittelt. Die damit einhergehende Änderung der an dem Speicherelement abfallenden Spannung wird gemessen. Durch Verhältnisbildung von Ladungs- und Spannungsänderung wird schließlich die Kapazität des Speicherelements ermittelt. Hieraus wird auf den Alterungszustand des Speicherelements geschlossen. Auf der Grundlage des ermittelten Alterungszustands wird der Spannungs-Schwellenwert für Speicherelemente mit fortgeschrittener Alterung niedriger gesetzt als für solche mit weniger weit fortgeschrittener Alterung, mit dem Ziel eines ungefähr gleichen "Todeszeitpunkts" sämtlicher Speicherelemente des Energiespeichers. Diese Maßnahme kann im Einzelfall zu einer signifikanten Erhöhung der Gesamtlebensdauer des Energiespeichers führen, ohne dessen Leistungsfähigkeit wesentlich zu beeinträchtigen.

### Überlagerung der genannten Maßnahmen

Wie oben bereits erwähnt wurde, finden bei manchen Ausführungsformen die drei genannten Maßnahmen gemeinsam Anwendung; bei einigen Ausführungsformen handelt es sich hingegen um Unterkombinationen von jeweils zwei der Maßnahmen. Beispielsweise kann einer (einheitlichen oder speicherelement-individuellen) Temperaturverstellung des Spannungs-Schwellenwerts eine vom Fahrzeug-Betriebszustand abhängige (für alle Speicherelemente einheitliche) Verstellung überlagert sein. Diesen beiden Abhängigkeiten können wiederum alterungszustand-abhängige individuelle Schwellenwerte überlagert sein. Solche Überlagerungen sind beispielsweise als Abweichungen von einem mittleren Schwellenwert darstellbar, die für jedes Speicherelement addiert werden. Nehmen wir beispielsweise an, daß ein mittlerer nomineller Spannungs-Schwellenwert 2,4 V beträgt. Aufgrund einer momentan gemessenen relativ hohen Temperatur des Energiespeichers sei dieser Schwellenwert um 0,3 V herabgesetzt. Der derzeitige Betriebszustand des Fahrzeugs (dynamischer Betrieb, im Gegensatz zum als normal betrachteten undynamischen Betrieb) erlaube jedoch einen momentan um 0,1 V höheren Spannungs-Schwellenwert. Von zwei betrachteten Speicherelementen sei nun eines relativ "jung", so daß es keiner Schwellenwertherabsetzung zwecks Alterungsverlangsamung bedarf. Für dieses Speicherelement wird in diesem Beispiel ein Schwellenwert von 2,2 V gesetzt. Bei einem anderen betrachteten Speicherelement sei hingegen die Alterung gegenüber den anderen Speicherelementen so weit fortgeschritten, daß für dieses zur Alterungsverlangsamung der Schwellenwert um 0,1 V herabgesetzt wird. Für dieses Speicherelement wird in dem vorliegenden Beispiel also ein Schwellenwert von 2,1 V gesetzt.

Während sich der Betriebszustand des Fahrzeugs und die Energiespeichertemperatur innerhalb von Sekunden bis Minuten ändern können, ist der Alterungszustand eines Speicherelements eine relativ langsam (z.B. auf einer Zeitskala von Tagen bis Monaten) veränderliche Größe. Entsprechend erfolgen bei manchen der Ausführungsformen die Ermittlung der Temperatur bzw. des Fahrzeug-Betriebszustands und eine entsprechende temperaturabhängige bzw. fahrzeugbetriebszustand-abhängige Verstellung des Schwellenwerts relativ häufig (z.B. mit einer Periode im Bereich von Sekunden bis Minuten), während die Ermittlung des Alterungszustands der einzelnen Zellen und eine entsprechende alterungszustand-abhängige Verstellung des Schwellenwerts seltener (z.B. mit einer Periode im Bereich von Tagen bis Monaten) erfolgt.

### Energieabfuhr aus schwellenüberschreitenden Speicherelementen und dem gesamten Energiespeicher

Bei einigen Ausführungsformen wird die wegen Schwellenüberschreitung aus einem Speicherelement entnommene Energie dissipiert, z.B. über einen Verlustwiderstand verheizt. Bei anderen Ausfiihrungsformen - die insgesamt wirkungsgradmäßig günstiger sind - wird hingegen die aus einem Speicherelement abgeführte Ladung hingegen einem oder mehreren anderen Speicherelementen des Energiespeichers zugeführt. Aufgrund der eingangs erwähnten Tendenz zu einer ungleichmäßigen Aufladung sind nämlich häufig diese anderen Speicherelemente noch aufnahmefähig, ohne bei Aufladung sogleich selbst ihre Spannungsschwelle zu überschreiten.

Es kann natürlich vorkommen, daß so viele (oder möglicherweise alle) Speicherelemente den Schwellenwert überschreiten, daß die restlichen Speicherelemente (wenn vorhanden) keine ausreichende Aufnahmekapazität für die abzuführende Ladung mehr haben. Bei manchen Ausführungsformen ist für diesen Fall vorgesehen, daß ein Lade-/Entlade-Steuergerät eine Energieentnahme aus dem Gesamt-Energiespeicher veranlaßt (auch das Lade-/Entlade-Steuergerät erhält z.B. Temperatur- und/oder Betriebszustand-Information, um den Energiespeicher auch insgesamt temperatur- und/oder betriebszustandabhängig aufzuladen und zu entladen, wobei hierfür eine generell etwas niedrigere Spannung für die einzelnen Speicherelemente als die Spannungs-Schwellenwerte gesorgt wird, um eine Interferenz mit den schwellenwertgesteuerten Ladungsausgleichsvorgängen zu vermeiden). Die entnommene Energie kann beispielsweise einem Nutzverbraucher zugeführt oder über einen Widerstand verheizt (dissipiert) werden. Bei manchen Ausführungsformen kann auch die Ladungsumverteilungsschaltung selbst energiedissipierend wirken. Hierzu sind bei einigen Ausführungsformen Heizwiderstände in der Ladungsumverteilungsschaltung vorgesehen.; bei anderen Ausführungsformen beruht die Energiedissipation auf Verlusten, die bei der Ladungsumverteilung in der Ladungsumverteilungsschaltung auftreten. Diese Verluste entziehen dem Gesamtenergiespeicher Energie in Form von Wärme. Bei zu hoher Gesamtenergie im Energiespeicher führt also bei den letztgenannten Ausführungsformen ein fortlaufendes Umverteilen von Ladung zu einer allmählichen Abnahme der gespeicherten Energie, bis schließlich die Spannung sämtlicher Speicherelemente den Spannungs-Schwellenwert unterschritten hat.

### Beispielhafte Speicherelemente

Bei den Speicherelementen handelt es bei einigen Ausführungsformen um galvanische Elemente, bei anderen Ausführungsformen hingegen um Kondensatoren, und zwar bei manchen dieser Ausführungsformen um (oben bereits erwähnte) Doppelschicht-Kondensatoren.

Galvanische Elemente speichern die Energie in chemischer Form. Damit lassen sich relativ hohe Energiedichten erzielen. Die Umwandlung chemischer in elektrische Energie ist mit gewissen Verlusten verbunden und läuft i.a. etwas langsamer ab, als z.B. bei (Doppelschicht)Kondensatoren, so daß im Vergleich zu diesen i.a. kleinere Leistungen, bezogen auf die insgesamt speicherbare Energiemenge, entnehmbar sind. Zudem sinkt die Umwandlungsgeschwindigkeit i.a. etwas mit abnehmender Temperatur, und ferner ist die Lebensdauer solcher elektrochemischer Batterien eher beschränkt. Gleichwohl überwiegt bei verschiedenen Anwendungen der Bedarf an hoher Energiedichte, so daß bei manchen Ausführungsformen galvanischen Speicherelemente, zum Beispiel Nickel-Metall-Hydrid-Zellen oder Lithium-Ion-Zellen, zum Einsatz kommen.

Kondensatoren speichern die Energie direkt in elektrischer Form, so daß diese praktisch Verlust- und verzögerungsfrei und beliebig oft entnommen werden kann. Allerdings ist die Energiedichte bei herkömmlichen Kondensatoren relativ klein (typischerweise 0,01 Wh/kg beim Elektrolytkondensator). Doppelschicht-Kondensatoren haben die Vorteile herkömmlicher Kondensatoren (praktisch verlustfreie, schnelle und häufige Entladbarkeit), erreichen jedoch weit höhere Energiedichten. Diese liegen z.B. ein bis zwei Größenordnungen über denjenigen von Aluminium-Elektrolytkondensatoren. Der Speichermechanismus beruht bei ihnen auf der Bewegung von Ionen im elektrischen Feld (und nicht nur der Polarisation von Ionen, wie beim herkömmlichen Kondensator mit Dielektrikum). Und zwar kommt es zur Ladung/Entladung einer elektrochemischen Doppelschicht (daher rührt die Bezeichnung "Doppelschichtkondensator"). Diese Schicht umfaßt zwei Phasen: Beispielsweise elektrisch leitfähigen Kohlenstoff auf der einen und Ionen, die in einem Lösungsmittel gelöst sind, auf der anderen Seite. Beim Laden und Entladen werden die Ionen von den polarisierten Kohlenstoffelektroden angezogen bzw. abgestoßen. Da der Abstand der Ladungsträger i.a. nur wenige Nanometer beträgt, und die Oberfläche solcher Kohlenstoffmaterialien sehr groß ist, lassen sich relativ hohe Kapazitäten bei geringem Volumen erzielen (siehe z.B. T. Dietrich: UltraCaps - Power für innovative Automobilapplikationen, in A. Krappel (Hrsg.): "Kurbelwellenstartgenerator (KSG) - Basis für zukünftige Fahrzeugkonzepte, 2. Auflage, Expert-Verlag 2000, S. 202-207 - Anmerkung: "UltraCap" ist ein Markenname für von der Fa. Epcos vertriebene Doppelschichtkondensatoren und wird in der Fachliteratur manchmal als allgemeine Bezeichnung für Doppelschichtkondensatoren verwendet).

### Fig. 1: Lebensdauer als Funktion von Spannung und Temperatur

Nun zurückkommend auf Fig. 1 ist dort die Lebensdauer eines bei Ausführungsformen des Energiespeichers verwendeten beispielhaften Speicherelements, hier eines typischen Doppelschicht-Kondensators, als Funktion der Speicherelement-Spannung für vier verschiedene beispielhafte Temperaturen gezeigt. Gemeinsam ist den vier dargestellten Lebensdauer-Spannungs-Kurven, daß die Lebensdauer mit sinkender Spannung stark (und zwar exponentiell) zunimmt, und daß sie außerdem mit sinkender Temperatur zunimmt; so entspricht z.B. einer Verringerung der Temperatur um etwa 25°C eine Verzehnfachung der Lebensdauer.

Bei einigen Ausführungsformen wird auf der Grundlage der in Fig. 1 dargestellten Zusammenhänge die Betriebsspannung der Speicherelemente durch entsprechendes Setzen des Spannungs-Schwellenwerts - abhängig von der jeweils vorliegenden Temperatur - auf einem ausreichend niedrigen Wert gehalten, um eine bestimmte Lebensdauer der Speicherelemente zu erreichen. In Fig. 1 ist beispielhaft eine 10-Jahreslinie strichliert eingezeichnet, welche zeigt, daß zur Erreichung einer zehnjährigen Lebensdauer bei -15°C eine Spannung von 2,65 Volt einzuhalten ist, während bei höheren Temperaturen, und zwar z.B. 5°C, 25°C, 45°C, die Spannung auf 2,45 V bzw. 2,25 V bzw. 2,05 V abzusenken ist.

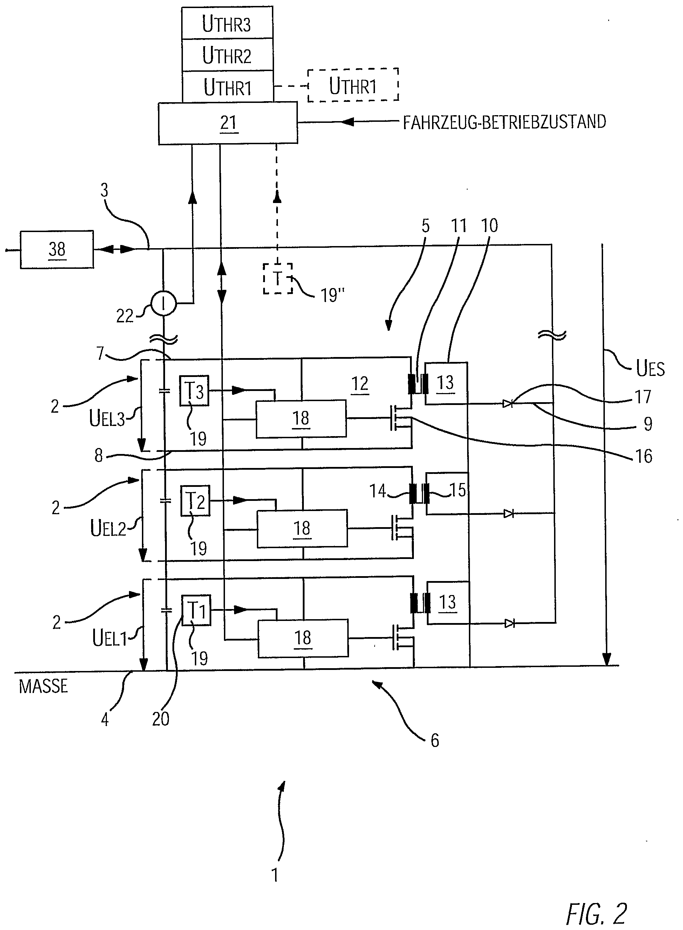

### Fig. 2: Ladungsumverteilungsschaltung mit einzelnen Speicherelementen

Die Ladungsumverteilungsschaltung 1 gemäß Fig. 2 weist mehrere, in Reihe geschaltete Speicherelemente 2 auf. Bei der vorliegenden Ausfuhrungsform handelt es sich bei diesen um Doppelschichtkondensatoren, die - wie unten noch näher erläutert wird - mit Spannungen im Bereich von ungefähr 2,4 V betrieben werden. Zur Erzielung einer Gesamtspannung U_{ES} des Energiespeichers 1 von ungefähr 48 V sind daher z.B. 20 Speicherelemente 2 in Reihe geschaltet. Der Energiespeicher 1 hat zwei Leistungsstrom führende Verbindungen nach außen, nämlich eine Plusverbindung 3 und eine Verbindung zur Masse 4. Über diese Verbindungen 3, 4 fließen die Ströme, mit denen der Energiespeicher 1 von außen geladen bzw. nach außen entladen wird.

Bei der Ausführungsform der Fig. 2 ist jedem Speicherelement 2 eine Ladungsumverteilungseinheit 5 zugeordnet; die Ladungsumverteilungseinheiten 5 bilden zusammen eine Ladungsumverteilungsschaltung 6. Die Ladungsumverteilungseinheiten 5 haben jeweils zwei Eingangsanschlüsse 7, 8 und zwei Ausgangsanschlüsse 9, 10. Von den Eingangsanschlüssen 7, 8 ist jeweils einer (7) mit der Plusklemme und der andere (8) mit der Minusklemme des zugeordneten Speicherelements 2 verbunden. Von den Ausgangsanschlüssen 9, 10 ist der auf höherem Potential liegende (9) jeweils mit der Plusverbindung 3 des Energiespeichers 1 und der auf niedrigerem Potential liegende (10) mit der Masse 4 verbunden. Die Ladungsumverteilungseinheiten 5 sind also ausgangsseitig parallel mit der Serienschaltung der Speicherelemente 2 verbunden.

Die Ladungsumverteilungseinheiten 5 weisen jeweils einen Transformator 11 auf, welcher die Ladungsumverteilungseinheiten 5 in einen Primärteil 12 mit den Eingangsanschlüssen 7, 8 und einen Sekundärteil 13 mit den Ausgangsanschlüssen 9, 10 unterteilt. Der Transformator 11 braucht nicht spannungsübersetzend zu wirken, kann also ein Übersetzungsverhältnis von Eins haben. Bei dem Beispiel gemäß Fig. 2 besitzen Primärwicklung 14 und Sekundärwicklung 15 unterschiedliche Polung, so daß sich primär- und sekundärseitig jeweils hohe und tiefe Spannungsniveaus gegenüberliegen.

Der Primärteil 12 der Ladungsumverteilungseinheiten 5 wird durch eine Reihenschaltung der Primärwicklung 14 und eines Leistungsschalters 16 gebildet, bei dem es sich beispielsweise um einen Bipolar- oder Feldeffektleistungstransistor (hier einen Leistungs-MOSFET) handelt. Der Sekundärteil 13 wird durch eine Reihenschaltung der Sekundärwicklung 15 und einer Diode 17 gebildet, welche Strom zur Plusverbindung 3 der Serienschaltung der Speicherelemente 2 durchläßt.

Die Ladungsumverteilungseinheit 5 weist außerdem eine lokale Steuereinheit 18 auf, welche die Schaltsignale für den Leistungsschalter 16 liefert. Sie ist in der in Fig. 2 gezeigten Ausfiihrungsform mit den Eingangsanschlüssen 7 und 8 verbunden, um die Spannung U_{EL} des jeweils zugeordneten Speicherelements 2 zu messen.

Bei dem Ausführungsbeispiel der Fig. 2 ist den Speicherelementen 2 jeweils ein Temperaturfühler 19 zugeordnet. Dieser mißt laufend die momentane Temperatur Tₙ des zugehörigen Speicherelements 2 und liefert der zugehörigen lokalen Steuereinheit 18 laufend ein die gemessene Temperatur repräsentierendes Signal (wobei "n" die Nummer des Speicherelements 2 ist). Der Temperaturfühler 19 ist z.B. in wärmeleitungsmäßig gekoppelter Weise am Gehäuse des jeweiligen Speicherelements 2 angeordnet.

Die lokalen Steuereinheiten 18 sind über Steuerleitungen 20 (beispielsweise in Form eines seriellen Bus) mit einer übergeordneten Steuereinheit 21 verbunden. Sie teilen der übergeordneten Steuereinheit 21 über die Steuerleitungen 20 lokale Informationen mit, z.B. die gemessene, momentan am zugehörigen Speicherelement 2 abfallende Spannung U_{ELn} sowie die gemessene momentane Temperatur Tₙ dieses Speicherelements 2 (wobei "n" wiederum die Nummer des Speicherelements 2 ist). In der anderen Richtung teilt die übergeordnete Steuereinheit 21 den lokalen Steuereinheiten 18 über die Steuerleitungen 20 Spannungs-Schwellenwerte mit. Bei einigen Ausführungsformen handelt es sich hierbei um individuelle Schwellenwerte U_{THRn} für die einzelnen Ladungsumverteilungseinheiten 5 (in Fig. 2 mit durchgezogenen Linien dargestellt), bei anderen Ausführungsformen sendet die übergeordnete Steuereinheit 21 hingegen einen einheitlichen Schwellenwert U_{THR} für alle Ladungsumverteilungseinheiten 5 (in Fig. 2 gestrichelt dargestellt).

Die Ladungsumverteilung funktioniert folgendermaßen: Wenn die gemessene momentane Spannung U_{ELn} eines oder mehrerer der Speicherelemente 2 über dem von der übergeordneten Steuereinheit 21 vorgegebenen Spannungs-Schwellenwert U_{THRn} bzw. U_{THR} liegt, veranlaßt die betreffende lokale Steuereinheit 18, daß so lange Ladung aus dem betreffenden Speicherelement 2 abgeführt wird, bis diese Spannung unter den Spannungs-Schwellenwert U_{THRn} bzw. U_{THR} gesunken ist (bei einigen Ausführungsformen ist hier eine Hysterese vorgesehen, d.h. die Ladungsabfuhr erfolgt so lange, bis die Spannung U_{ELn} unter eine zweite Schwelle gesunken ist, die beispielsweise um einen festen Betrag unter dem Spannungs-Schwellenwert U_{THRn} bzw. U_{THR} liegt). Hierzu taktet die lokale Steuereinheit 18 den Leistungsschalter 16. Wenn der Schalter 16 geschlossen ist, fließt im Primärteil 12 Strom, so daß Energie in den Transformator 11 eingespeichert wird. Wenn er geöffnet wird, wird an den Ausgangsanschlüssen 9, 10 eine Spannung induziert, die weit größer als die primärseitige Spannung U_{ELn}, und damit auch größer als die Spannung U_{SP} der Reihenschaltung der Speicherelemente 2 ist. Anders ausgedrückt wird beim Öffnen des Schalters 16 die im Transformator 11 eingespeicherte Energie sekundärseitig unter Spannungshochsetzung abgegeben. Die dem einzelnen Speicherelement 2 entnommene Energie wird - abgesehen von der in der Ladungsumverteilungsschaltung 6 in Verlustwärme umgewandelten Energie - nach Spannungshochsetzung wieder in die Reihenschaltung der Speicherelemente 2 eingespeist. Insgesamt bilden die Ladungsumverteilungseinheiten 5 sog. primär getaktete Sperrwandler.

Bei manchen Ausfuhrungsformen ist statt der individuellen Temperaturfühler 19 ein gemeinsamer Temperaturfühler 19" vorgesehen (gestrichelt gezeichnet in Fig. 2), der beispielsweise in Wärmeleitungskopplung mit einem Gesamtgehäuse des Energiespeichers 1 angeordnet ist und die gemeinsame Temperatur T der Speicherelemente 2 laufend mißt und der übergeordneten Steuereinheit 21 meldet.

Bei manchen Ausführungsformen ist im Lade-/Entladekreis des Energiespeichers 1 ein Strommesser 22 vorgesehen, der seine Strommeßwerte der übergeordneten Steuereinheit 21 mitteilt. Aus der Kenntnis des Lade-/Entladestroms bei einem Lade- bzw. Entladevorgang und der Kenntnis der damit einhergehenden Änderungen der Spannungen U_{ELn} der einzelnen Speicherelemente 2 ist die übergeordnete Steuereinheit 21 in der Lage, die Kapazität der einzelnen Speicherelemente 2 zu ermitteln.

Bei manchen Ausführungsformen, bei denen der Energiespeicher 1 als Antriebs- und Bremsenergiespeicher eines Elektrofahrzeugs oder Elektrohybridfahrzeugs dient, empfängt die übergeordnete Steuereinheit 21 Signale, welche den momentanen Fahrzeug-Betriebszustand (oder Änderungen des Fahrzeug-Betriebszustands) repräsentieren. Diese Betriebszustandsignale zeigen beispielsweise an, ob sich das Fahrzeug gerade in Betriebsruhe oder in Betrieb befindet, ob gerade ein Betrieb mit stärker oder schwächer wechselnden Fahrzuständen vorliegt, und/oder ob gerade eine elektrische Nutzbremsung durchgeführt wird.

Wie unten noch näher beschrieben wird, berechnet die übergeordnete Steuereinheit 21 aus der oder den genannten Eingangsgrößen (individuelle Temperaturen Tₙ oder gemeinsame Temperatur T, Lade-/Entladestrom und damit einhergehende Änderung der Spannungen U_{ELn}, und/oder Information über den Fahrzeug-Betriebszustand) die individuellen Spannungs-Schwellenwerte U_{THRn} oder - bei manchen Ausführungsformen - einen einheitlichen Spannungs-Schwellenwert U_{THR} und übermittelt diese(n) den lokalen Steuereinheiten 18, welche diese(n) Schwellenwert(e) ihrer (oben beschriebenen) Ladungsabführungsaktivität zugrundelegen.

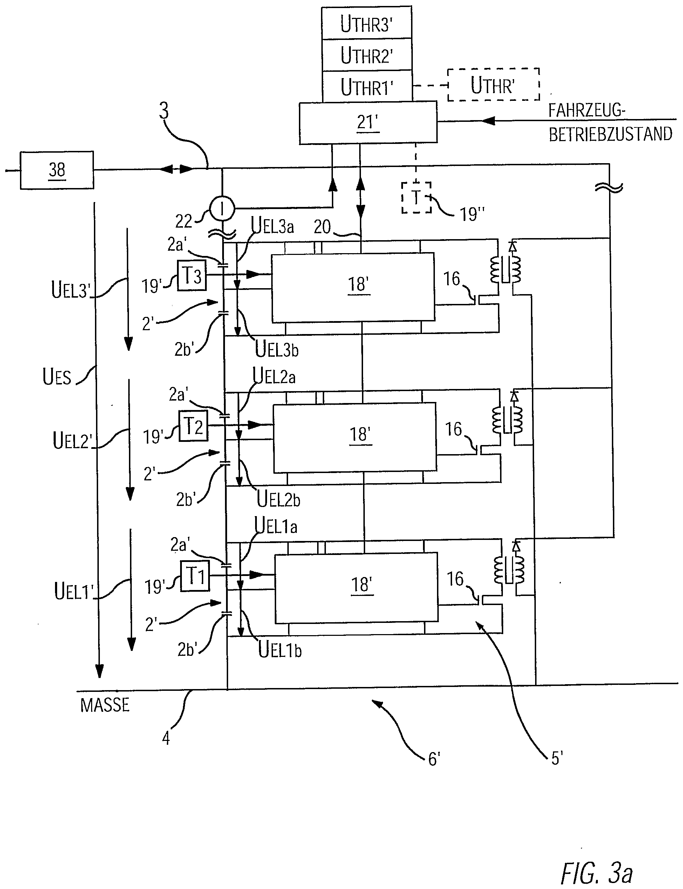

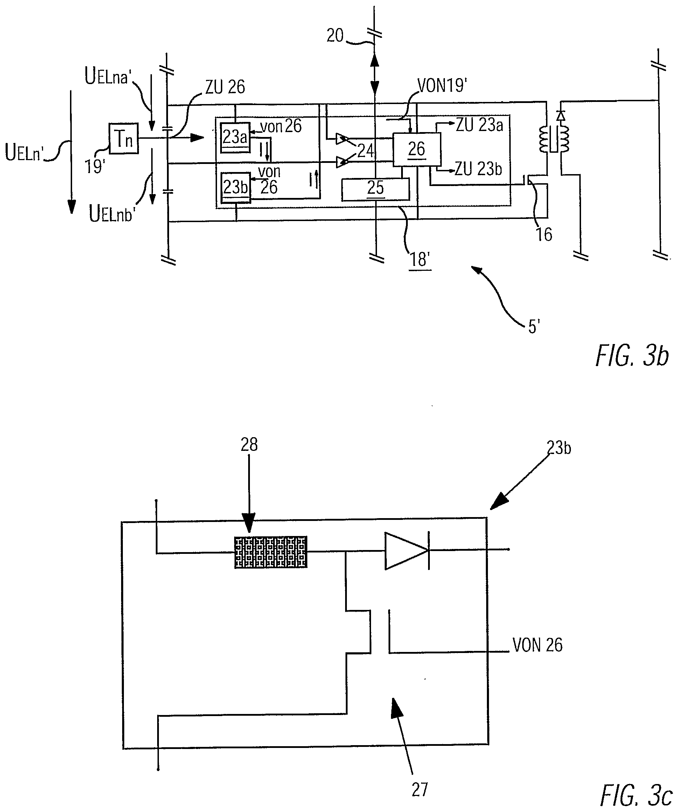

### Fig. 3: Ladungsumverteilungsschaltung mit Gruppen von Speicherelementen

Die Fig. 3a-c zeigen eine andere Ausführungsform, bei der jeweils zwei in Serie geschaltete Speicherelemente (die hier mit 2a' und 2b') bezeichnet sind, zu einer Speicherelement-Gruppe 2' zusammengefaßt sind, entsprechend der älteren (nicht vorveröffentlichten) Patentanmeldung DE 102004062186. Die Einzelspannungen der Speicherelement 2a' und 2b' sind mit U_{ELna}' und U_{ELnb}' bezeichnet, und die Spannung der Speicherelement-Gruppen 2', welche die Summe von U_{ELna}' und U_{ELnb}' ist, ist mit U_{ELn}' bezeichnet. Sieht man die Speicherelement-Gruppen 2' von Fig. 3a als analog zu den Speicherelementen 2 von Fig. 2 an, so gilt das oben zu Fig. 2 beschriebene auch für die Ausführungsform von Fig. 3. Beispielsweise messen bei Fig. 3 die lokalen Steuereinheiten 18' die Spannungen der U_{ELn}' der einzelnen Speicherelement-Gruppen 2'. Die individuellen Temperaturfühler Tₙ' messen bei Fig. 3 die gemeinsame Temperatur der Speicherelemente 2a', 2b' der jeweiligen Speicherelement-Gruppe 2'. Die lokalen Steuereinheiten 18' melden diese Werte der übergeordneten Steuereinheit 21', wie oben im Zusammenhang mit Fig. 2 beschrieben wurde. Dieses wiederum ermittelt aufgrund dieser (und ggf. anderer, oben beschriebener) Eingangsgrößen individuelle oder einheitliche Schwellenwerte U_{THRn}' bzw. U_{THR}', die sich bei Fig. 3 auf die Spannungen U_{ELn}' der Speicherelement-Gruppen 2' beziehen. Ein bestimmter Spannungs-Schwellenwert U_{THRn} bzw. U_{THR} der Ausführungsform von Fig. 2, z.B. 2,25 V, entspricht also bei der Ausführungsform von Fig. 3 einem doppelt so hohen, vom übergeordneten Steuereinheit 21' vorgegebenen Spannungs-Schwellenwert U_{THRn}' bzw. U_{THR}, also z.B. 4,5 V.

Die Ladungsumverteilung funktioniert analog Fig. 2. Das heißt, wenn die gemessene momentane Spannung U_{ELn}' einer oder mehrerer der Speicherelement-Gruppen 2' über dem von der übergeordneten Steuereinheit 21' vorgegebenen Spannungs-Schwellenwert U_{THRn}' bzw. U_{THR}' liegt, veranlaßt die lokale Steuereinheit 18', daß Ladung aus der betreffenden Speicherelement-Gruppe 2' abgeführt wird. Hierzu taktet die lokale Steuereinheit 18' (durch einen Mikrocontroller 26, Fig. 3b), den Leistungsschalter 16, so daß der betrachteten Speicherelement-Gruppe 2' Ladung entnommen wird, die den anderen Speicherelement-Gruppen 2' zugeführt wird.

Grundsätzlich könnten sich auch Asymmetrien im Ladungszustand zwischen den beiden Speicherelementen 2a', 2b' innerhalb einer Speicherelement-Gruppe 2' herausbilden. Zur Vermeidung solcher Asymmetrien ist die lokale Steuereinheit 18' der Ausfuhrungsform von Fig. 3 dazu ausgebildet, die Einzelspannungen U_{ELna}' und U_{ELnb}' innerhalb der jeweiligen Speicherelement-Gruppe 2' zu symmetrieren. Zu diesem Zweck ist ein zusätzlicher Spannungsabgriff zwischen den einzelnen Speicherelementen 2a', 2b' vorgesehen, der es der jeweiligen lokalen Steuereinheit 18' erlaubt, nicht nur die Spannung U_{ELn}' der jeweiligen Speicherelement-Gruppe 2' zu messen, sondern auch die Spannungen U_{ELna}' und U_{ELnb}' der einzelnen Speicherelemente 2a', 2b'. Überschreitet eine der einzelnen Spannungen U_{ELna}' oder U_{ELnb}' die Hälfte der von der übergeordneten Steuereinheit 21' vorgegebenen Schwellenwerts U_{THRn}' bzw. U_{THR}', so entnimmt die lokale Steuereinheit 18' diesem Speicherelement (z.B. 2a') Ladung und führt sie dem anderen Speicherelement (z.B. 2b') der betreffenden Speicherelement-Gruppe 2' zu, so lange, bis der Schwellenwert U_{THRn}'/2 bzw. U_{THR}'/2 (und ggf. ein zusätzlicher Hysteresewert) wieder unterschritten wird.

Zur Erzielung dieser gruppeninternen Ladungsumverteilung hat die lokale Steuereinheit 18' beispielsweise die in Fig. 3b dargestellte Unterstruktur. Und zwar umfaßt sie zwei Spannungswandler 23a, 23b, zwei Spannungsmeßverstärker 24, eine Kommunikationsschnittstelle 25 sowie den genannten Mikrocontroller 26. Da die Spannungswandler 23a, 23b der gruppeninternen Ladungsumverteilung der Speicherelemente 2a', 2b' dienen, werden sie im folgenden auch "Speicherelementwandler" genannt. Der Speicherelementwandler 23a, 23b eines Speicherelements 2a', 2b' ist mit seinem Ausgang mit dem positiven Anschluß des jeweils anderen Speicherelements 2b' bzw. 2a' verbunden. Die Speicherelementwandler 23a, 23b sind beispielsweise Drosselwandler, wobei der obere Speicherelementwandler 23a z.B. ein spannungsherabsetzender Wandler und der untere Speicherelementwandler 23b z.B. ein spannungsheraufsetzender Wandler ist. Eine beispielhafte Schaltung für einen spannungsheraufsetzenden Drosselwandler 23b ist schematisch in Fig. 3c gezeigt. Ähnlich wie bei den im Zusammenhang mit Fig. 2 beschriebenen Ladungsumverteilungseinheiten 5 erfolgt bei den Speicherelementwandlern 23a, b ein Abführen von Ladung aus dem jeweils zugehörigen Speicherelement 2a', 2b', indem jeweils ein Leistungsschalter 27 in getakteter Weise betätigt wird. Dies ruft durch Selbstinduktion in einer Drossel 28 einen Stromfluß unter Spannungsheraufsetzung bzw. - herabsetzung hervor. Die Ansteuerung des Schalters 27 erfolgt analog zu derjenigen des Schalters 16 durch den Mikrocontroller 26. Eine entsprechende Schaltung für den spannungsherabsetzenden Drosselwandler 23b erhält man z.B. aus Fig. 3c im wesentlichen durch Vertauschung des Schalters 27 und der Drossel 28.

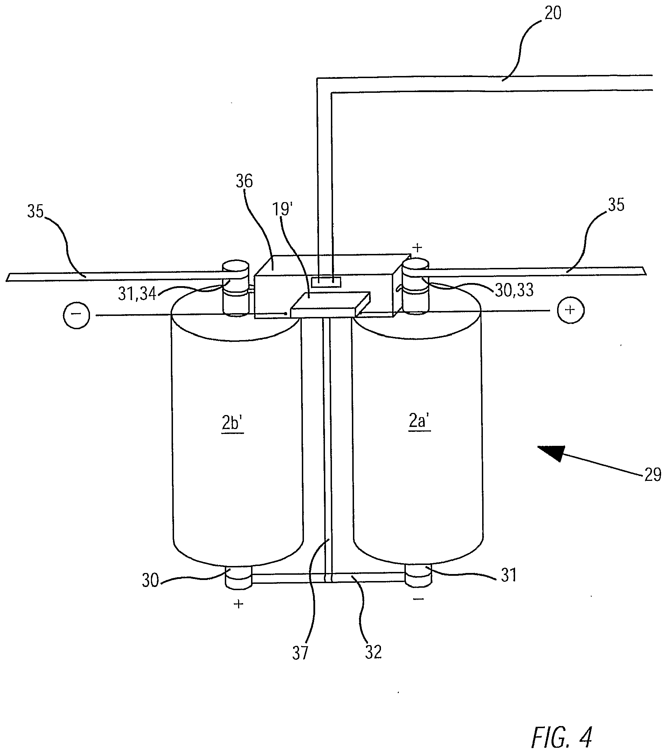

### Fig. 4: Zwillingsanordnung

Fig. 4 veranschaulicht eine Zwillingsanordnung 29 von zwei Speicherelementen 2a', 2b'. Bei ihnen handelt es sich beispielsweise um Doppelschicht-Kondensatoren, deren Gehäuse eine langgestreckt zylindrische Form mit zwei z.B. kreisförmigen Stirnseiten hat. Die beiden Speicherelemente 2a', 2b' sind parallel mit in einer gemeinsamen Ebene liegenden Längsachsen der Gehäusezylinder angeordnet. An den Längsachsen weisen die Speicherelemente 2a', 2b' an den jeweils gegenüberliegenden Stirnseiten einen positiven Stromanschluß 30 bzw. negativen Stromanschluß 31 auf. Die Speicherelemente 2a', 2b' sind hinsichtlich ihrer Polaritäten entgegengesetzt orientiert angeordnet, d.h. an den benachbarten Stirnseiten liegt jeweils ein positiver Stromanschluß 30 des einen Speicherelements und ein negativer Stromanschluß 31 des anderen Speicherelements. An einer Seite sind die beiden benachbarten Stromanschlüsse 30, 31 mit einem Verbindungsleiter 32 gekoppelt. Die beiden Speicherelemente 2a', 2b' bilden somit zusammen eine Speicherelement-Gruppe 2' von Fig. 3. Die auf der anderen Seite liegenden Stromanschlüsse 30 bzw. 31 bilden die positive bzw. negative Anschlußklemme 33 bzw. 34 dieser Gruppe 2'. Sie sind jeweils über Verbindungsleisten 35 mit weiteren Zwillingsanordnungen der gezeigten Art verbunden. Zwischen den beiden genannten Anschlußklemmen 33, 34 ist die der Gruppe 2' zugehörige Ladungsumverteilungseinheit 5' (Fig. 3) in einem Gehäuse 36 angeordnet. Das Gehäuse 36 nimmt auch den Temperaturfühler 19' auf, und zwar so, daß sich dieser in Wärmeleitungskontakt mit beiden Speicherelementen 2a', 2b' befindet. Die Ladungsumverteilungseinheit im Gehäuse 36 ist, wie oben anhand von Fig. 3 erläutert wurde, mit den beiden Anschlußklemmen 33, 34 des Speicherelement-Paars 2' verbunden und hat außerdem einen Abgriff 37 auf das Potential zwischen den beiden Speicherelementen 2a', 2b' z.B. durch Kontaktierung des Verbindungsleiters 32. Die Ladungsumverteilungseinheit im Gehäuse 3b ist außerdem noch mit der positiven und negativen Anschlußklemme des gesamten Energiespeichers, dessen Teil die betrachtete Speicherelement-Gruppe 2' ist, verbunden. Außerdem ist sie zur Kommunikationsverbindung mit der übergeordneten Steuereinheit 21 über eine Steuerleitung 20 gekoppelt.

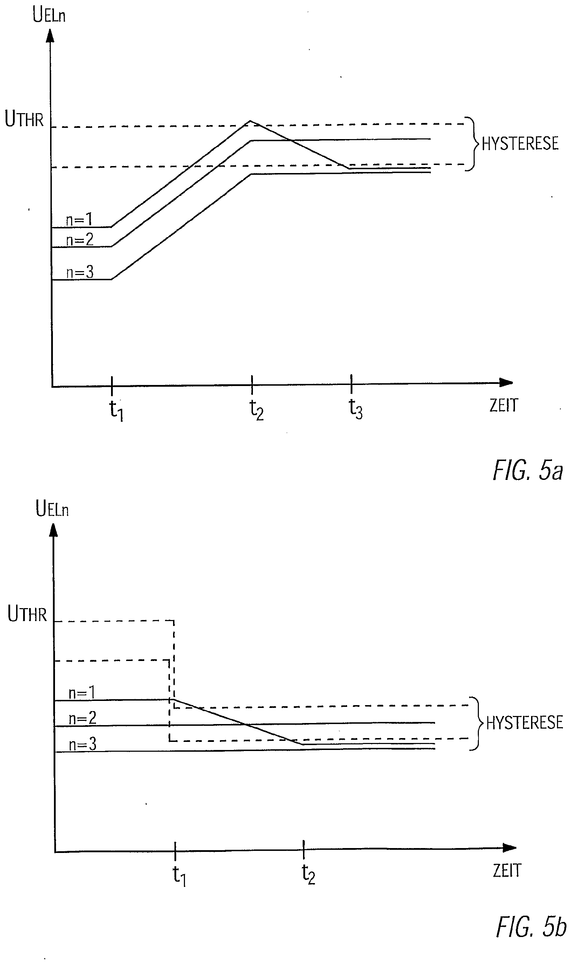

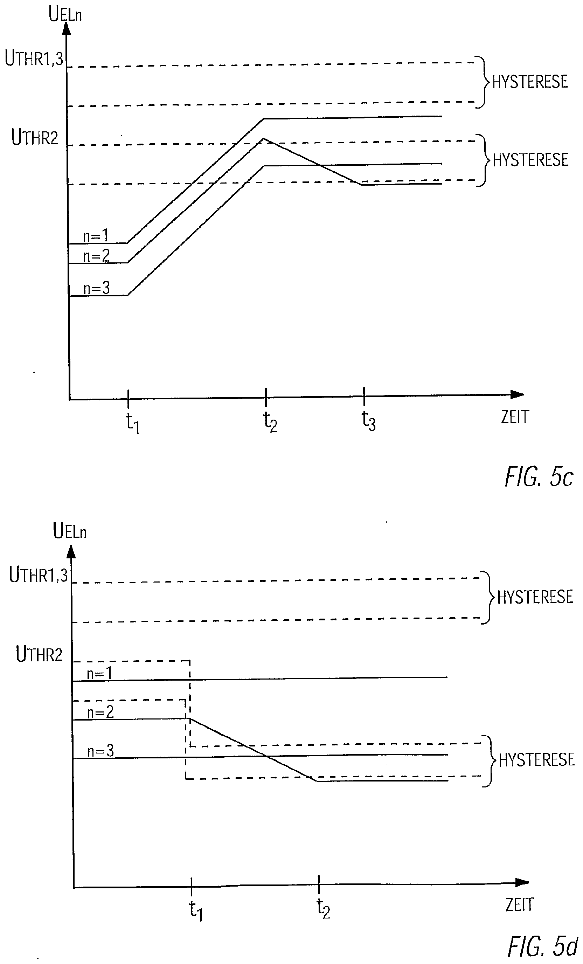

### Fig. 5: Ladungsumverteilung

Fig. 5 veranschaulicht die mit den Ausführungsformen gemäß Fig. 2-4 erzielte Ladungsumverteilungsfunktion anhand verschiedener Spannungs-Zeit-Diagramme. Auf der senkrechten Achse ist jeweils die Spannung U_{ELn} aufgetragen, auf der horizontalen Achse die Zeit t. In den Diagrammen sind jeweils beispielhafte Spannungsverläufe für drei Speicherelemente 2, bezeichnet n=1, n=2, n=3, sowie eine oder mehrere Spannungsschwellen U_{THR} bzw. U_{THRn} dargestellt. Zu den Spannungsschwellen gehört jeweils eine Hysterese.

Fig. 5a zeigt einen ersten beispielhaften Fall, bei dem im Verlauf eines Aufladevorgangs der Spannungs-Schwellenwert U_{THR} überschritten wird. Dabei soll es sich bei dem Beispiel gemäß Fig. 5a um einen einheitlichen Schwellenwert für sämtliche Speicherelemente handeln.

Bereits im Anfangszustand haben die verschiedenen Speicherelemente unterschiedliche Spannungen, und zwar sei am Anfang die Spannung U_{EL1} die höchste, U_{EL2} die mittlere, und U_{EL3} die niedrigste der drei Spannungen. Diese bereits anfangs gegebenen Spannungsunterschiede rühren z.B. von vorausgegangenen Lade- und Entladevorgängen her; die allgemeine Neigung zur Ausbildung solcher Ladungsasymmetrien wurde bereits oben erläutert. Zum Zeitpunkt t₁ setzt nun ein Aufladevorgang ein, der bewirkt, daß die Spannungen U_{ELn} aller drei Speicherelemente mit ungefähr gleicher Steigung zunehmen. Zum Zeitpunkt t₂ überschreitet die Spannung des höchstliegenden Speicherelements, U_{EL1}, die von der übergeordneten Steuereinheit vorgegebene Spannungsschwelle U_{THR}. Mit dieser Schwellenüberschreitung beginnt der oben bereits angesprochene Umladevorgang, derart, daß aus dem Speicherelement n=1 Ladung entnommen wird und diese Ladung den anderen Speicherelementen zugeführt wird. Der Einfachheit halber wird in Fig. 5a angenommen, daß mit dem Überschreiten der Schwelle U_{THR} auch der Aufladevorgang endet, so daß in Fig. 5a ab t₂ alleine die Wirkung der Ladungsentnahme dargestellt werden kann (im allgemeinen Fall könnte der Aufladevorgang hingegen auch noch nach t₂ weitergehen, so daß dem Speicherelement n=1 in konkurrierender Weise Ladung aufgrund des Aufladevorgangs zugeführt und aufgrund des Umladungsvorgangs abgeführt würde). Infolgedessen sinkt die Spannung U_{EL1} des von dem Umladevorgang betroffenen Speicherelements n=1 ab, wohingegen die Spannungen U_{EL2} und U_{EL3} der anderen Speicherelemente näherungsweise konstant bleiben (genau genommen steigen diese Spannungen leicht an, da die dem Speicherelement n=1 entnommene Ladung den anderen Speicherelementen zugeführt wird - wenn die Zahl der anderen Speicherelemente jedoch relativ groß ist, tritt hierbei ein relativ starker Verdünnungseffekt ein, so daß der Spannungsanstieg der anderen Speicherelemente in der in Fig. 5 dargestellten Zeichengenauigkeit nicht erkennbar ist). Zum Zeitpunkt t₃ erreicht die abnehmende Spannung U_{EL1} den um die Hysterese verringerten Spannungs-Schwellenwert, woraufhin der Umladevorgang beendet wird, und nun auch die Spannung U_{EL1} konstant bleibt.

Fig. 5b veranschaulicht einen ähnlichen Fall, bei dem jedoch die Schwellenwertüberschreitung nicht durch einen Aufladevorgang, sondern durch eine Herabsetzung des Schwellenwerts U_{THR} hervorgerufen wird. Der Anfangszustand entspricht demjenigen von Fig. 5a. Zum Zeitpunkt t₁ wird der Schwellenwert U_{THR} durch die übergeordnete Steuereinheit 21 verringert. Wie bereits erläutert wurde und unten noch näher ausgeführt wird, kann dies z.B. an einem entsprechenden Anstieg der Temperatur der Speicherelemente oder an einer Änderung des Fahrzeug-Betriebszustands liegen. Infolge der Schwellenänderung kommt nun der höhere Spannungswert, U_{EL1} über dem Schwellenwert U_{THR} zu liegen, während die anderen Spannungswerte, U_{EL2} und U_{El3} unter dem herabgesetzten Schwellenwert U_{THR} verbleiben. Wie bei Fig. 5a beginnt der Umladevorgang mit der Schwellenwertüberschreitung (hier bei t₁) für das überschreitende Speicherelement n=1, so daß dessen Spannung U_{EL1} abnimmt. Die Spannungen U_{EL2} und U_{EL3} der anderen Speicherelemente bleiben hingegen - innerhalb der Zeichengenauigkeit - gleich. Bei t₂ unterschreitet die Spannung U_{EL1} den Schwellenwert U_{THR} samt Hysterese, so daß der Umladevorgang endet und die Spannung U_{EL1} nun konstant bleibt.

Fig. 5c veranschaulicht einen Fall ähnlich Fig. 5a, jedoch bei einer Ausführungsform mit speicherelement-individuellen Spannungs-Schwellenwerten. In dem Beispiel der Fig. 5c liegt der Schwellenwert für das Speicherelement n=2 (also der Schwellenwert U_{THR2}) niedriger als die Schwellenwerte U_{THR1} und U_{THR3} für die anderen Speicherelemente. Der in Fig. 5c angenommene Anfangszustand der Spannungen U_{ELn} entspricht demjenigen von Fig. 5a. Zum Zeitpunkt t₁ beginnt nun ein Aufladevorgang, der bei t₂ zu einer Schwellenüberschreitung führt. Da im Beispiel der Fig. 5c der Schwellenwert U_{THR2} deutlich niedriger liegt als die anderen Schwellenwerte, kommt es hier beim Speicherelement n=2 mit dessen Spannung U_{EL2} zur Schwellenwertüberschreitung, während die Spannungen U_{EL1} und U_{EL3} ihre Schwellen U_{THR1} und U_{THR3} nicht überschreiten. Folglich beginnt bei t₂ für das Speicherelement n=2 der Umladevorgang, welcher (unter der Annahme einer gleichzeitigen Beendigung des Aufladevorgangs, wie in Fig. 5a) zu einem Absinken der Spannung U_{THR2} führt. Die Spannungen U_{THR1} und U_{THR3} bleiben hingegen näherungsweise konstant. Bei t₃ unterschreitet die Spannung U_{EL2} den zugehörigen Schwellenwert U_{THR2} samt Hysterese, so daß zu diesem Zeitpunkt der Umladevorgang endet. Der tiefere Schwellenwert U_{THR} kann beispielsweise dadurch begründet sein, daß das Speicherelement n=2 eine höhere Temperatur oder ein höheres effektives Alter als die anderen Speicherelemente aufweist.

Fig. 5d veranschaulicht einen Fall mit speicherelement-individuellen Schwellenwerten, ähnlich Fig. 5c, bei dem jedoch die Schwellenwertüberschreitung nicht durch Aufladung, sondern - ähnlich Fig. 5b - durch eine Schwellenwertherabsetzung hervorgerufen wird. Im Anfangszustand sind sämtliche drei Schwellen, U_{THR1}, U_{THR2} und U_{THR3} ungefähr auf den gleichen Wert gesetzt. Zum Zeitpunkt t₁ wird nun eine dieser Schwellen, nämlich U_{THR2}, von der übergeordneten Steuereinheit herabgesetzt. Eine derartige selektive Herabsetzung kann beispielsweise durch einen besonderen Temperaturanstieg des zugehörigen Speicherelements n=2 oder durch die Feststellung, daß dieses Speicherelement besonders weit gealtert ist, hervorgerufen werden. Aufgrund der mit der Schwellenwertherabsetzung einhergehenden Schwellenwertüberschreitung durch U_{EL2} beginnt für das Speicherelement n=2 der Ladungsumverteilungsvorgang, welcher bei Schwellenwert/Hysteresen-Unterschreitung wieder endet, entsprechend Fig. 5b und 5c.

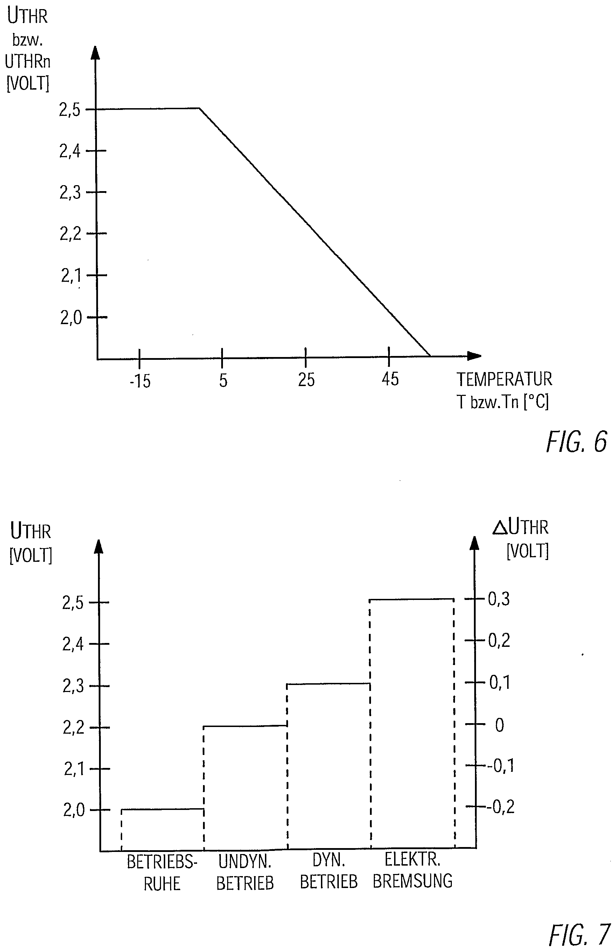

### Fig. 6: Schwelle als Funktion der Temperatur

Fig. 6 zeigt beispielhaft, wie der von der übergeordneten Steuereinheit vorgegebene Spannungs-Schwellenwert in Abhängigkeit von der Temperatur variiert wird. Der gezeigte Zusammenhang gilt gleichermaßen für die Temperaturabhängigkeit der einheitlichen Schwelle U_{THR} und der speicherelement-individuellen Schwellen U_{THRn}, die je nach Ausführungsform zum Einsatz kommen. Im ersteren Fall bezieht sich der dargestellte Verlauf der Spannungsschwelle auf eine gemeinsame Temperatur T des Speichers und im letzteren Fall auf eine individuelle Temperatur Tₙ eines einzelnen Speicherelements 2 (Fig. 2) bzw. einer einzelnen Speicherelement-Gruppe 2' (Fig. 3). Die Abhängigkeit ist derart, daß der Spannungs-Schwellenwert U_{THR} bzw. U_{THRn} mit abnehmender Temperatur T bzw. Tₙ zunimmt, und zwar so, daß eine bestimmte Lebensdauer der Speicherelemente erreicht wird; bei dem dargestellten Beispiel von Fig. 6 handelt es sich hierbei um eine Lebensdauer von 10 Jahren. Der Anstieg Spannungs-Schwellenwerts U_{THR} bzw. U_{THRn} kann zudem auf einen bestimmten Höchstwert, z.B. 2,5 V, begrenzt sein. Der in Fig. 6 dargestellte Zusammenhang ist bei manchen Ausführungsformen z.B. in Form einer Tabelle in der übergeordneten Steuereinheit 21 gespeichert. Diese ermittelt den Schwellenwert U_{THR} bzw. U_{THRn} in Abhängigkeit von der gemessenen oder ermittelten Temperatur T bzw. Tₙ aus der Tabelle und gibt ihn den lokalen Steuereinheiten 18 vor.

### Fig. 7: Schwelle als Funktion des Fahrzeug-Betriebszustands

In ähnlicher Weise veranschaulicht Fig. 7 die Abhängigkeit der Spannungsschwelle vom Fahrzeug-Betriebszustand. Bei manchen Ausführungsformen ist diese Abhängigkeit alleine, d.h. ohne die in Fig. 6 dargestellte Temperaturabhängigkeit gegeben. Bezüglich dieser Ausführungsformen gibt die linke senkrechte Achse von Fig. 7 absolute Werte U_{THR} für die Spannungsschwelle an. Bei anderen Ausführungsformen ist die in Fig. 7 gezeigte Abhängigkeit der Spannungsschwelle vom Fahrzeug-Betriebszustand der in Fig. 6 gezeigten Temperaturabhängigkeit überlagert; für diese Ausführungsformen gibt die rechte senkrechte Achse von Fig. 7 Änderungswerte ΔU_{THR} an. Diese sind - je nach Vorzeichen - zu dem Spannungs-Schwellenwert U_{THR} bzw. U_{THRn} von Fig. 6 zu addieren oder von diesem zu subtrahieren. Da die verschiedenen Betriebszustände alle Speicherelemente 2 bzw. Speicherelement-Gruppen 2' des Energiespeichers 1 in gleicher Weise betreffen, ist in Fig. 7 nur eine Abhängigkeit des gemeinsamen Spannungs-Schwellenwert U_{THR} bzw. eine gemeinsame Schwellenänderung dargestellt, nicht jedoch individuelle Spannungs-Schwellenwerte bzw. individuelle Änderungen der Spannungs-Schwellenwerte.

In dem Beispiel von Fig. 7 ist zwischen vier Betriebszuständen unterschieden, nämlich Betriebsruhe, undynamischem Betrieb (z.B. Autobahnfahrt), dynamischem Betrieb (z.B. Stadtfahrt) und elektrischer Bremsung. Der Betriebszustand "undynamischer Betrieb" wird hier gewissermaßen als Normalzustand angesehen, mit dem keine Änderung des anderweitig (z.B. temperaturabhängig) bestimmten Spannungs-Schwellenwert verbunden sein soll. Bei Betriebsruhe hingegen wird der Spannungs-Schwellenwert zwecks Lebensdauerverlängerung deutlich abgesenkt, im Beispiel von Fig. 7 z.B. um 0,2 V. Hingegen wird er bei dynamischem Betrieb und - noch ausgeprägter - bei elektrischer Bremsung zwecks Speicherkapazitätserhöhung angehoben, und zwar um 0,1 V bei dynamischem Betrieb, und um weitere 0,2 V bei elektrischer Bremsung.

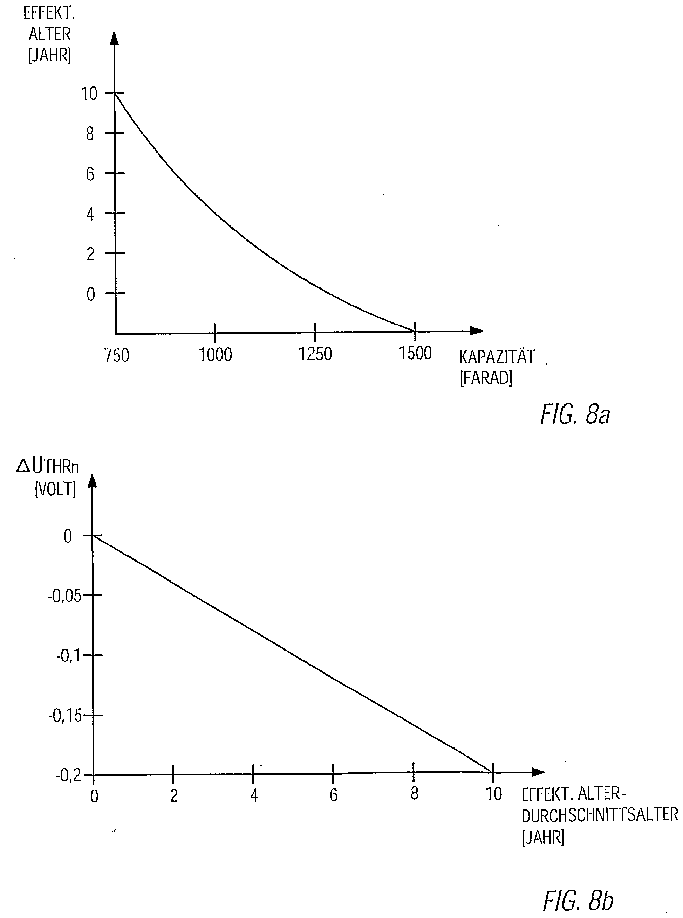

### Fig. 8: Schwellensetzung zur Vergleichmäßigung der Alterung

Fig. 8 veranschaulicht eine bei manchen Ausführungsformen vorgenommene asymmetrische Schwellensetzung zur Erzielung einer langsameren Alterung bereits überdurchschnittlich gealterter Speicherelemente. Fig. 8a veranschaulicht zunächst, wie beispielsweise die Kapazität eines Speicherelements, z.B. eines Doppelschicht-Kondensators, mit zunehmender Alterung abnimmt, und veranschaulicht somit auch, wie aus der Bestimmung der Kapazität auf das effektive Alter eines Speicherelements geschlossen wird. Bei dem in Fig. 8a dargestellten Zusammenhang wurde beispielhaft angenommen, daß das zugrundeliegende Speicherelement bei solchen Spannungen betrieben wird, daß es nach ungefähr 10 Jahren das Ende seiner Lebensdauer erreicht hat. Wie oben ausgeführt wurde, ermittelt die übergeordnete Steuereinheit 21 die Kapazität durch Messung des Lade-/Entladestroms und der damit einhergehenden Spannungsänderung. Aus dem in Fig. 8a dargestellten Zusammenhang erschließt es sodann jeweils das effektive Alter der einzelnen Speicherelemente.

Wie bereits oben ausgeführt wurde, würde eine vorzeitige Alterung einzelner Speicherelemente normalerweise zu einem dieser frühzeitigen Alterung entsprechenden frühzeitigen Ausfall des Energiespeichers führen. Eine solche vorzeitige Alterung ist an der horizontalen Achse von Fig. 8b als die Differenz des effektiven Alters eines Speicherelements und des Durchschnittsalters aller Speicherelemente des Energiespeichers aufgetragen. In Fig. 8b ist nun beispielhaft dargestellt, um welchen Differenzbetrag ΔU_{THRn} der Spannungs-Schwellenwert eines betrachteten Speicherelements n in Abhängigkeit von dessen vorzeitiger Alterung abgesenkt wird, um die weitere Alterung dieses Speicherelements zu verzögern, damit das Alter der Speicherelemente zu vergleichmäßigen und somit die Lebensdauer des Energiespeichers insgesamt zu erhöhen. Wie Fig. 8b zeigt, erfolgt bei durchschnittlicher Alterung keine derartige Absenkung des Spannungs-Schwellenwerts. Wie man Fig. 1 beispielhaft entnehmen kann, führt bei den hier betrachteten Speicherelementen, z.B. Doppelschicht-Kondensatoraen, eine Spannungsabsenkung um 0,2 V zu einer Lebensdauerverlängerung von einem Jahr auf ungefähr 10 Jahre. Entsprechend wird gemäß Fig. 8b der Spannungs-Schwellenwert um ungefähr 0,2 V abgesenkt, wenn ein betrachtetes Speicherelement effektiv bereits um 10 Jahre älter als der Durchschnitt der Speicherelemente ist. Die übergeordnete Steuereinheit 21 ermittelt das effektive Alter sämtlicher Speicherelemente und das Durchschnittsalter, berechnet daraus die Differenz des effektiven Alters und des Durchschnittsalters für jedes Speicherelement, ermittelt hieraus mit dem in der übergeordneten Steuereinheit 21 gespeicherten Zusammenhang von Fig. 8b die Schwellenwertabsenkung ΔU_{THRn} für jedes Speicherelement, und übermittelt den lokalen Steuereinheiten 18 entsprechend in speicherelement-individueller Weise abgesenkte Spannungs-Schwellenwerte U_{THRn}.

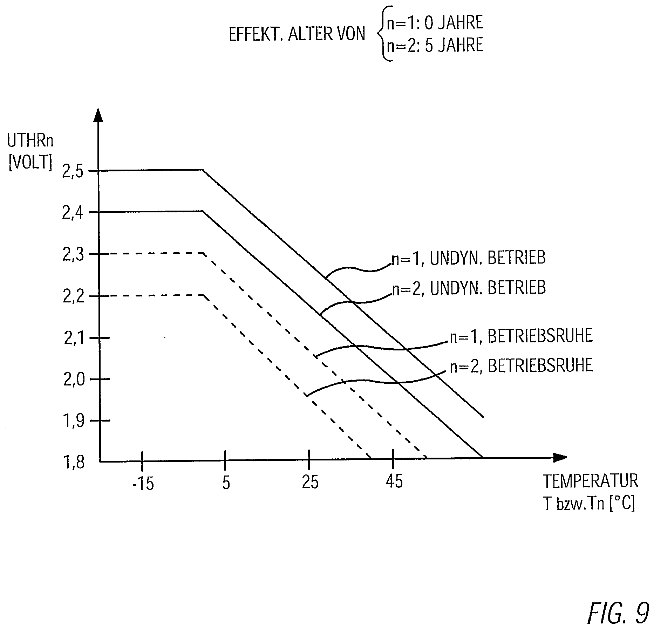

### Fig. 9: Kombination dieser Schwellen-Abhängigkeiten

Fig. 9 veranschaulicht die Temperaturabhängigkeit der Spannungsschwellen entsprechend Fig. 6, jedoch nun zusätzlich mit der in Fig. 7 veranschaulichten Abhängigkeit vom Fahrzeug-Betriebszustand und der in Fig. 8 veranschaulichten Abhängigkeit vom individuellen Alterungszustand der einzelnen Speicherelemente. Ein erstes Speicherelement, genannt n=1, ist im Beispiel von Fig. 9 noch nicht gealtert, hat also das Alter "0 Jahre". Für den Betriebszustand "undynamischer Betrieb" entspricht seine Schwellenwert-Temperatur-Kurve der in Fig. 6 gezeigten. Ein zweites Speicherelement, genannt n=2, ist im Beispiel von Fig. 9 hingegen schon stark gealtert, und zwar hat es bereits ein effektives Alter von fünf Jahren. Entsprechend Fig. 8b ist daher die Schwellenwert-Temperatur-Kurve des Speicherelements n=2 um z.B. 0,1 V zu niedrigerer Spannung verschoben.

Mit gestrichelten Linien zeigt Fig. 9 die gleichen Spannungsschwellen-Temperatur-Kurven für einen anderen Fahrzeug-Betriebszustand, nämlich den Betriebszustand "Betriebsruhe". Entsprechend Fig. 7 sind hierbei die Spannungsschwellen-Temperatur-Kurven gegenüber dem Betriebszustand "undynamischer Betrieb" um 0,2 V zu niedrigeren Werten verschoben.

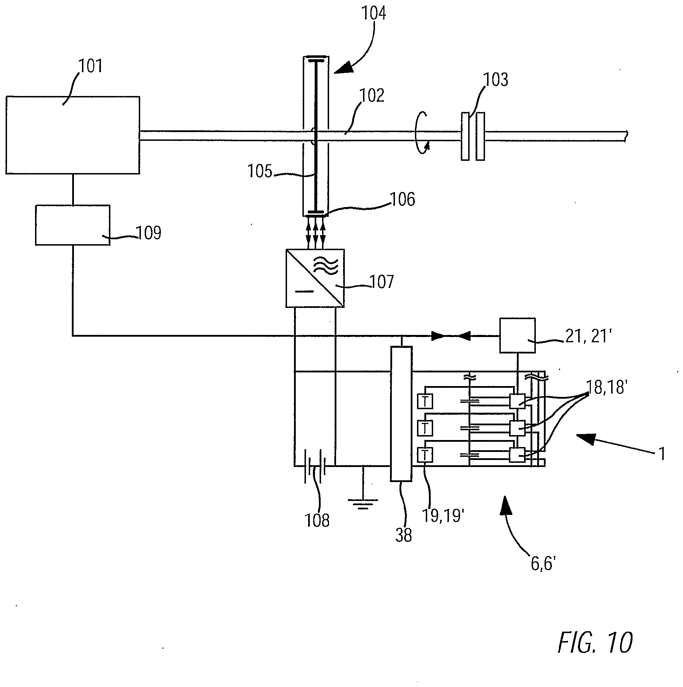

### Fig. 10: Antriebssystem mit Energiespeicher

Fig. 10 veranschaulicht ein Kraftfahrzeug-Antriebssystem mit einem Energiespeicher 1 und einer Ladungsumverteilungsschaltung 6 gemäß Fig. 2-9. Das Antriebssystem weist einen Verbrennungsmotor 101 auf, der Drehmoment über eine Antriebswelle 102 (z.B. die Kurbelwelle des Verbrennungsmotors 101), eine Kupplung 103 und weitere (nicht gezeigte) Teile eines Antriebsstrangs auf die Antriebsräder des Fahrzeugs abgibt. Auf der Antriebswelle 102 sitzt eine als Antriebsunterstützung (Booster) und als Rekuperationsbremse arbeitende elektrische Maschine 104, hier eine Drehstrom-Asynchronmaschine oder eine z.B. mit Permanentmagneten ausgerüstete Drehstrom-Synchronmaschine. Diese ist zwischen Motor- und Generatorbetrieb umschaltbar. Als Booster und ggf. als Starter des Verbrennungsmotor arbeitet sie im Motorbetrieb, als Rekuperationsbremse und ggf. Generator zur Speisung von Verbrauchern und Aufladung von Energiespeichern arbeitet sie hingegen im Generatorbetrieb. Die elektrische Maschine 104 weist einen direkt auf der Antriebswelle 102 sitzenden und drehfest mit ihr verbundenen Läufer 105 sowie einen z.B. am Gehäuse des Verbrennungsmotor 101 abgestützten Ständer 106 auf. Die elektrische Maschine 104 und der Verbrennungsmotor 101 laufen permanent zusammen; das Starten des Verbrennungsmotors 101, die Boost-Funktion, die Rekuperationsbremsfunktion und/oder die Generatorfunktion erfolgen direkt und ohne Übersetzung. Die (hier nicht dargestellte) Wicklung des Ständers 106 wird durch einen Wechselrichter 107 mit elektrischen Strömen und Spannungen frei einstellbarer Amplitude, Phase und Frequenz gespeist. Der Wechselrichter 107 erzeugt diese Ströme und Spannungen aus einem Gleichspannungs-Eingangskreis, in dem eine herkömmliche Langzeitbatterie 108 (z.B. ein Blei-Schwefelsäure-Akkumulator) angeordnet ist. Mit dem Eingangskreis ist auch der Energiespeicher 1 mit der Ladungsumverteilungsschaltung 6 verbunden, und zwar über ein Lade-/Entladesteuergerät 38. Der Energiespeicher 1 ist, wie in den Fig. 2 und 3 näher gezeigt wurde, aus in Reihe geschalteten Speicherelementen 2 oder Speicherelement-Gruppen 2' aufgebaut. Wenn die elektrische Maschine 104 kurzzeitig einen hohen elektrischen Leistungsbedarf hat, etwa zur Drehmomentzugabe bei Fahrzeugbeschleunigung (Boost-Funktion), wird dem Energiespeicher 1 kurzzeitig hohe elektrische Leistung entnommen und der elektrischen Maschine 104 über den Wechselrichter 107 zugeführt. In umgekehrter Richtung erfolgt Einspeicherung elektrischer Energie mit hoher Leistung bei Bremsvorgängen des Fahrzeugs, wenn die elektrische Maschine 104 kurzzeitig hohe mechanische Leistung in elektrische Leistung umwandelt und über den Wechselrichter 107 dem Energiespeicher zuführt. Im übrigen erfolgt das Nachladen des Energiespeichers während des laufenden Betriebs, z.B. wenn die elektrische Maschine 104 als Generator zur Versorgung von Verbrauchern etc. arbeitet. Falls der Energiespeicher 1 z.B. nach einem längeren Fahrzeugstillstand entladen ist, kann er vor dem Startvorgang aus der Langzeitbatterie 108 aufgeladen werden. Im Betrieb erfolgt die Ermittlung der Spannungsschwellen und die mit Hilfe der Spannungsschwellen durchgeführte Umladung gemäß der oben im Zusammenhang mit Fig. 2-9 beschriebenen Art und Weise. , Das Setzen der Spannungsschwellen besorgt eine übergeordnete Steuereinheit 21, 21' gemäß Fig. 2 bzw. 3. Eingangsinformationen sind hierfür beispielsweise mit Temperaturfühlern 19, 19' gemessene Temperaturen, ermittelte Alterungszustände von Speicherelementen und/oder Fahrzeug-Betriebszustände, die von einem Verbrennungsmotor-Steuergerät 109 mitgeteilt werden, entsprechend den obigen Ausführungen zu Fig. 2-9. Auch das Lade-/Entladesteuergerät 38 erhält die Temperatur- und/oder Betriebszustand-Information, um den Energiespeicher 1 auch insgesamt temperatur- und/oder betriebszustandabhängig aufzuladen und zu entladen.

Die bevorzugten Ausführungsformen erlauben es, einen Energiespeicher aus mehreren in Reihe geschalteten Speicherelementen mit hohem Gesamtwirkungsgrad auf Lebensdauer erhaltende Weise zu betreiben.

## Patentansprüche

1. Energiespeicher mit mehreren, in Reihe geschalteten Speicherelementen (2, 2') und einer Ladungsumverteilungsschaltung (6, 6'),
welcher so eingerichtet ist, daß die Speicherelement-Spannung (U_{ELn}, U_{ELn}') gemessen und mit einem Spannungs-Schwellenwert (U_{THRn}, U_{THR}, U_{THRn}', U_{THR}') verglichen wird, wobei die Ladungsumverteilungsschaltung (6, 6') bei Überschreiten des Spannungs-Schwellenwerts (U_{THRn}, U_{THR}, U_{THRn}', U_{THR}') durch ein Speicherelement (2, 2') aus diesem Speicherelement (2, 2') Ladung abführt und hierdurch dessen Spannung (U_{ELn}, U_{ELn}') verringert, und
wobei außerdem eine speicherbezogene Temperaturermittlung durchgeführt wird, und der Spannungs-Schwellenwert (U_{THRn}, U_{THR}, U_{THRn}', U_{THR}') variabel in Abhängigkeit von der ermittelten Temperatur (Tₙ, T) gesetzt wird, derart, daß mit zunehmender Temperatur (Tₙ, T) der Spannungs-Schwellenwert (U_{THRn}, U_{THR}, U_{THRn}', U_{THR}') verringert wird, **dadurch gekennzeichnet, dass** der Spannungs-Schwellenwert (U_{THRn}, U_{THR}, U_{THRn}', U_{THR}') auch in Abhängigkeit vom momentanen Betriebszustand des Fahrzeugs variabel gesetzt wird, derart, daß der Schwellenwert (U_{THRn}, U_{THR}, U_{THRn}', U_{THR}') für relativ kurz dauernde Zeiträume mit relativ hohem Einspeicherungs- oder Entnahmebedarf höher gesetzt wird.

2. Energiespeicher nach Anspruch 1, bei welchem die aus dem Speicherelement (2, 2') abgeführte Ladung einem oder mehreren anderen Speicherelementen (2, 2') des Energiespeichers (1) zugeführt wird.

3. Energiespeicher nach Anspruch 1 oder 2, bei welchem ein gemeinsamer Spannungs-Schwellenwert (U_{THR}, U_{THR}') für die Speicherelemente (2, 2') des Energiespeichers (1) verwendet wird, und dieser gemeinsamer Spannungs-Schwellenwert (U_{THR}, U_{THR}') variabel in Abhängigkeit von der ermittelten Temperatur (T) gesetzt wird.

4. Energiespeicher nach Anspruch 3, bei welchem die ermittelte Temperatur (T) eine gemeinsame Temperatur der Speicherelemente ist.

5. Energiespeicher nach Anspruch 1 oder 2, bei welchem einzelnen Speicherelementen (2) oder Gruppen (2') von Speicherelementen individuelle Spannungs-Schwellenwerte (U_{THRn}, U_{THRn}') zugeordnet sind, und diese Spannungs-Schwellenwerte (U_{THRn}, U_{THRn}') variabel so gesetzt werden, daß sie für die einzelnen Speicherelemente (2) bzw. Gruppen (2') von Speicherelementen in Abhängigkeit von für die Speicherelemente (2) bzw. Gruppen (2') von Speicherelementen ermittelten Temperaturen (Tₙ) verschieden sein können.

6. Energiespeicher nach Anspruch 5, bei welchem die ermittelten Temperaturen (Tₙ, T) gemessene Temperaturen der einzelnen Speicherelemente (2) bzw. der Gruppen (2') von Speicherelementen sind.

7. Energiespeicher nach einem der Ansprüche 1 - 6, wobei die Speicherelemente (2, 2') hinsichtlich ihrer Alterung unterschiedlich weit fortgeschrittenen sein können,
welcher so eingerichtet ist, daß die Speicherelement-Spannung (U_{ELn}, U_{ELn}') gemessen und mit einem Spannungs-Schwellenwert (U_{THRn}, U_{THRn}') verglichen wird, wobei die Ladungsumverteilungsschaltung (6) bei Überschreiten des Spannungs-Schwellenwerts (U_{THRn}, U_{THRn}') durch ein Speicherelement (2, 2') aus diesem Speicherelement (2, 2') Ladung abführt und hierdurch dessen Spannung (U_{ELn}, U_{ELn}') verringert, und
wobei der Spannungs-Schwellenwert (U_{THRn}, U_{THRn}') für Speicherelemente (2, 2') mit relativ weit fortgeschrittener Alterung niedriger gesetzt wird als für Speicherelemente (2, 2') mit weniger weit fortgeschrittener Alterung.

8. Energiespeicher nach Anspruch 7, wobei der Spannungs-Schwellenwert (U_{THRn}, U_{THRn}') hinsichtlich ermittelter Temperatur (Tₙ, T) bzw. Fahrzeug-Betriebszustand häufiger umsetzbar ist als hinsichtlich Speicherelement-Alterung.

9. Energiespeicher für ein mit Elektroantrieb oder Elektrohybridantrieb ausgerüstetes Fahrzeug, mit mehreren, in Reihe geschalteten Speicherelementen (2, 2') und einer Ladungsumverteilungsschaltung (6, 6'),
welcher so eingerichtet ist, daß die Speicherelement-Spannung (U_{ELn}, U_{ELn}') gemessen und mit einem Spannungs-Schwellenwert (U_{THRn}, U_{THR}, U_{THRn}', U_{THR}') verglichen wird, wobei die Ladungsumverteilungsschaltung (6, 6') bei Überschreiten des Spannungs-Schwellenwerts (U_{THRn}, U_{THR}, U_{THRn}' U_{THR}') durch ein Speicherelement (2, 2') aus diesem Speicherelement (2, 2') Ladung abführt und hierdurch dessen Spannung (U_{ELn}, U_{ELn}') verringert, **dadurch gekennzeichnet, dass** der Spannungs-Schwellenwert (U_{THRn}, U_{THR}, U_{THRn}', U_{THR}') variabel in Abhängigkeit vom momentanen Betriebszustand des Fahrzeugs gesetzt wird, derart, daß der Schwellenwert (U_{THRn}, U_{THR}, U_{THRn}', U_{THR}') für relativ kurz dauernde Zeiträume mit relativ hohem Einspeicherungs- oder Entnahmebedarf höher gesetzt wird.

10. Energiespeicher nach einem der vorangehenden Ansprüche, wobei die Abhängigkeit vom momentanen Betriebszustand des Fahrzeugs eine oder mehrere der folgenden Abhängigkeiten ist:
- während dem Betrieb des Fahrzeugs ist der Schwellenwert (U_{THRn}, U_{THR}, U_{THRn}', U_{THR}') höher als bei Betriebsruhe;
- bei Betrieb mit stärker wechselndem Fahrzustand ist der Schwellenwert (U_{THRn}, U_{THR}, U_{THRn'}, U_{THR}') höher als bei Betrieb mit gleichmäßigerem Fahrzustand;
- bei elektrischer Nutzbremsung und danach ist der Schwellenwert (U_{THRn}, U_{THR}, U_{THRn}', U_{THR}') höher als bei Abwesenheit elektrischer Nutzbremsung.

## Claims

1. Energy store having a plurality of storage elements (2, 2') connected in series and a charge redistribution circuit (6, 6'), which energy store is configured so that the storage element voltage (U_{ELn}, U_{ELn}') is measured and compared with a voltage threshold value (U_{THRn}, U_{THR}, U_{THRn}', U_{THR}'), wherein, when the voltage threshold value (U_{THRn}, U_{THR}, U_{THRn}', U_{THR}') is exceeded by a storage element (2, 2'), the charge redistribution circuit (6, 6') dissipates charge from said storage element (2, 2') and reduces the voltage (U_{ELn}, U_{ELn}') thereof as a result, and wherein, furthermore, a store-related temperature determination is carried out and the voltage threshold value (U_{THRn}, U_{THR}, U_{THRn}' , U_{THR}') is set variably depending on the determined temperature (Tₙ, T) in such a way that the voltage threshold value (U_{THRn}, U_{THR}, U_{THRn}', U_{THR}') is reduced as the temperature (Tₙ, T) increases, **characterized in that** the voltage threshold value (U_{THRn}, U_{THR}, U_{THRn}', U_{THR}') is also set variably depending on the present operating state of the vehicle in such a way that the threshold value (U_{THRn}, U_{THR}, U_{THRn}', U_{THR}') is set to be higher for relatively short-lasting periods having a relatively high storage or withdrawal requirement.

2. Energy store according to Claim 1, in which the charge dissipated from the storage element (2, 2') is fed to one or more other storage elements (2, 2') of the energy store (1).

3. Energy store according to Claim 1 or 2, in which a common voltage threshold value (U_{THR}, U_{THR}') for the storage elements (2, 2') of the energy store (1) is used and said common voltage threshold value (U_{THR}, U_{THR}') is set variably depending on the determined temperature (T).

4. Energy store according to Claim 3, in which the determined temperature (T) is a common temperature of the storage elements.

5. Energy store according to Claim 1 or 2, in which single storage elements (2) or groups (2') of storage elements are assigned individual voltage threshold values (U_{THRn}, U_{THRn}') and said voltage threshold values (U_{THRn}, U_{THRn}') are set variably so that, for the single storage elements (2) or groups (2') of storage elements, they can be different depending on temperatures (Tₙ) determined for the storage elements (2) or groups (2') of storage elements.

6. Energy store according to Claim 5, in which the determined temperatures (Tₙ, T) are measured temperatures of the single storage elements (2) or of the groups (2') of storage elements.

7. Energy store according to one of Claims 1-6, wherein the storage elements (2, 2') can be advanced to different extents in terms of their ageing, which energy store is configured so that the storage element voltage (U_{ELn}, U_{ELn}') is measured and compared with a voltage threshold value (U_{THRn}, U_{THRn}'), wherein, when the voltage threshold value (U_{THRn}, U_{THRn}') is exceeded by a storage element (2, 2'), the charge redistribution circuit (6) dissipates charge from said storage element (2, 2') and reduces the voltage (U_{ELn}, U_{ELn}') thereof as a result, and wherein the voltage threshold value (U_{THRn}, U_{THRn}') is set to be lower for storage elements (2, 2') with relatively advanced ageing than for storage elements (2, 2') with less advanced ageing.

8. Energy store according to Claim 7, wherein the voltage threshold value (U_{THRn}, U_{THRn}') can be implemented more often in terms of determined temperature (Tₙ, T) or vehicle operating state than in terms of storage element ageing.

9. Energy store for a vehicle fitted with an electric drive or electric-hybrid drive and having a plurality of storage elements (2, 2') connected in series and a charge redistribution circuit (6, 6'), which energy store is configured so that the storage element voltage (U_{ELn}, U_{ELn}') is measured and compared with a voltage threshold value (U_{THRn}, U_{THR}, U_{THRn}', U_{THR}'), wherein, when the voltage threshold value (U_{THRn}, U_{THR}, U_{THRn}', U_{THR}') is exceeded by a storage element (2, 2'), the charge redistribution circuit (6, 6') dissipates charge from said storage element (2, 2') and reduces the voltage (U_{ELn}, U_{ELn}') thereof as a result, **characterized in that** the voltage threshold value (U_{THRn}, U_{THR}, U_{THRn}', U_{THR}') is set variably depending on the present operating state of the vehicle in such a way that the threshold value (U_{THRn}, U_{THR}, U_{THRn}', U_{THR}') is set to be higher for relatively short-lasting periods having a relatively high storage or withdrawal requirement.

10. Energy store according to one of the preceding claims, wherein the dependence on the present operating state of the vehicle is one or more of the following dependencies:
- the threshold value (U_{THRn}, U_{THR}, U_{THRn}', U_{THR}') is higher during the operation of the vehicle than during shutdown operation;
- the threshold value (U_{THRn}, U_{THR}, U_{THRn}', U_{THR}') is higher during operation when the vehicle state alternates to a greater extent than during operation when the vehicle state is more consistent;
- the threshold value (U_{THRn}, U_{THR}, U_{THRn}', U_{THR}') is higher during electrical regenerative braking and thereafter than in the absence of electrical regenerative braking.

## Revendications

1. Accumulateur d'énergie comprenant plusieurs éléments d'accumulation (2, 2') branchés en série et un circuit de redistribution de charge (6, 6'),
lequel est conçu de telle sorte que la tension d'élément d' accumulation (U_{ELn}, U_{ELn}') est mesurée et comparée à une valeur de seuil de tension (U_{THRn}, U_{THR}, U_{THRn}', U_{THR}'), le circuit de redistribution de charge (6, 6'), en cas de dépassement de la valeur de seuil de tension (U_{THRn}, U_{THR}, U_{THRn}', U_{THR}') par un élément d'accumulation (2, 2'), évacuant de la charge hors de cet élément d'accumulation (2, 2') et réduisant ainsi sa tension (U_{ELn}, U_{ELn}'), et
une détermination de la température rapportée à l'accumulateur étant en outre effectuée, et la valeur de seuil de tension (U_{THRn}, U_{THR}, U_{THRn}', U_{THR}') étant définie de manière variable en fonction de la température (Tₙ, T) déterminée de telle sorte que la valeur de seuil de tension (U_{THRn}, U_{THR}, U_{THRn}', U_{THR}') est réduite à mesure que la température (Tₙ, T) augmente, **caractérisé en ce que** la valeur de seuil de tension (U_{THRn}, U_{THR}, U_{THRn}' , U_{THR}' ) est également définie de manière variable en fonction de l'état de fonctionnement momentané du véhicule, de telle sorte que la valeur de seuil (U_{THRn}, U_{THR}, U_{THRn}', U_{THR}') est fixée plus haute pendant des périodes de durée relativement courte avec un besoin en accumulation ou en prélèvement relativement élevé.

2. Accumulateur d'énergie selon la revendication 1, avec lequel la charge évacuée hors de l'élément d'accumulation (2, 2') est acheminée à un ou plusieurs autres éléments d'accumulation (2, 2') de l'accumulateur d'énergie (1).

3. Accumulateur d'énergie selon la revendication 1 ou 2, avec lequel une valeur de seuil de tension (U_{THR}, U_{THR}') commune est utilisée pour les éléments d'accumulation (2, 2') de l'accumulateur d'énergie (1) et cette valeur de seuil de tension (U_{THR}, U_{THR}') commune est définie de manière variable en fonction de la température (T) déterminée.

4. Accumulateur d'énergie selon la revendication 3, avec lequel la température (T) déterminée est une température commune des éléments d'accumulation.

5. Accumulateur d'énergie selon la revendication 1 ou 2, avec lequel des valeurs de seuil de tension (U_{THRn}, U_{THRn}') individuelles sont associées aux éléments d'accumulation (2) individuels ou aux groupes (2') d'éléments d'accumulation, et ces valeurs de seuil de tension (U_{THRn}, U_{THRn}') sont définies de manière variable de telle sorte qu'elles peuvent être différentes pour les éléments d'accumulation (2) individuels ou les groupes (2') d'éléments d'accumulation en fonction des températures (Tₙ) déterminées pour les éléments d'accumulation (2) ou les groupes (2') d'éléments d'accumulation.

6. Accumulateur d'énergie selon la revendication 5, avec lequel les températures (Tₙ, T) déterminées sont des températures mesurées des éléments d'accumulation (2) individuels ou des groupes (2') d'éléments d'accumulation.

7. Accumulateur d'énergie selon l'une des revendications 1 à 6, les éléments d'accumulation (2, 2') pouvant avoir avancé jusqu'à des points différents pour ce qui concerne leur vieillissement,
lequel est conçu de telle sorte que la tension d'élément d'accumulation (U_{ELn}, U_{ELn}') est mesurée et comparée à une valeur de seuil de tension (U_{THRn}, U_{THRn}'), le circuit de redistribution de charge (6), en cas de dépassement de la valeur de seuil de tension (U_{THRn}, U_{THRn}') par un élément d'accumulation (2, 2'), évacuant de la charge hors de cet élément d'accumulation (2, 2') et réduisant ainsi sa tension (U_{ELn}, U_{ELn}'), et
la valeur de seuil de tension (U_{THRn}, U_{THRn}') pour les éléments d'accumulation (2, 2') ayant un vieillissement relativement avancé étant définie plus faible que pour les éléments d'accumulation (2, 2') ayant un vieillissement moins avancé.

8. Accumulateur d'énergie selon la revendication 7, la valeur de seuil de tension (U_{THRn}, U_{THRn}') étant applicable plus fréquemment concernant la température (Tₙ, T) déterminée ou l'état de fonctionnement du véhicule que concernant le vieillissement de l'élément d'accumulation.

9. Accumulateur d'énergie pour un véhicule équipé d'un groupe propulseur électrique ou d'un groupe propulseur hybride électrique, comprenant plusieurs éléments d'accumulation (2, 2') branchés en série et un circuit de redistribution de charge (6, 6'),
lequel est conçu de telle sorte que la tension d'élément d' accumulation (U_{ELn}, U_{ELn}') est mesurée et comparée à une valeur de seuil de tension (U_{THRn}, U_{THR}, U_{THRn}', U_{THR}'), le circuit de redistribution de charge (6, 6'), en cas de dépassement de la valeur de seuil de tension (U_{THRn}, U_{THR}, U_{THRn}', U_{THR}') par un élément d'accumulation (2, 2'), évacuant de la charge hors de cet élément d'accumulation (2, 2') et réduisant ainsi sa tension (U_{ELn}, U_{ELn}'),
**caractérisé en ce que**
la valeur de seuil de tension (U_{THRn}, U_{THR}, U_{THRn}', U_{THR}') est définie de manière variable en fonction de l'état de fonctionnement momentané du véhicule, de telle sorte que la valeur de seuil (U_{THRn}, U_{THR}, U_{THRn}' , U_{THR}') est fixée plus haute pendant des périodes de durée relativement courte avec un besoin en accumulation ou en prélèvement relativement élevé.

10. Accumulateur d'énergie selon l'une des revendications précédentes, la dépendance de l'état de fonctionnement momentané du véhicule étant une ou plusieurs des dépendances suivantes :
- pendant le fonctionnement du véhicule, la valeur de seuil (U_{THRn}, U_{THR}, U_{THRn}' , U_{THR}') est plus élevée que lors d'un repos opérationnel ;
- lors d'un fonctionnement avec un état de conduite fortement changeant, la valeur de seuil (U_{THRn}, U_{THR}, U_{THRn}' , U_{THR}') est plus élevée que lors d'un fonctionnement avec un état de conduite régulier ;
- lors d'un freinage de service électrique et après, la valeur de seuil (U_{THRn}, U_{THR}, U_{THRn}' , U_{THR}' ) est plus élevée que lors de l'absence du freinage de service électrique.
